# EUROPEAN PATENT SPECIFICATION

(11) **EP 0 273 380 B1**
(45) Date of publication and mention of the grant of the patent: **19.05.1993**
(21) Application number: 87119108.6
(22) Date of filing: 23.12.1987
(51) Int. Cl.: B23H 3/02, B23H 1/02

(54) **Power supply system for electrolytic processing apparatus**
Energiequellenanordnung für ein elektrolytisches Behandlungsgerät
Système d'alimentation pour appareil de traitement électrolytique

(30) Priority: 27.12.1986 JP 309269/86; 07.07.1987 JP 168945/87; 08.07.1987 JP 170749/87
(43) Date of publication of application: 06.07.1988
(73) Proprietor: SHIZUOKA SEIKI CO. LTD., Fukuroi-shi Shizuoka-ken (JP)
(72) Inventor: Asaoka, Teruo, Kakegawa-shi Shizuoka-ken (JP); Yoshioka, Shougo, Iwata-shi Shizuoka-ken (JP)
(74) Representative: Klingseisen, Franz, Dipl.-Ing.

(56) References cited:
- FR-A- 2 428 494

## Description

The present invention relates to a power supply system according to the preamble of claim 1.

Such a power supply system for an electrolytic processing apparatus is disclosed in FR-A1-2 428 494. This power supply system generates a high frequency signal by switching discharge switches successively conducting or non-conducting, wherein the discharge switches control capacitors which are connected in parallel, so that the capacitors are discharged successively and a high frequency pulse row is created. This power supply system isn't appropriate for supplying high voltage, because there is only one discharge switch conducting at a certain moment and the voltage is therefore delimited by the respective capacitor.

There are two types of electro-processing apparatus for electrically processing metals: namely, electrolytic processing apparatus and electric discharge processing machine. The first-mentioned apparatus, i.e., electrolytic processing apparatus, employs an electrolyte such as sodium nitrate and sodium chloride which fills the gap between a work and an electrode. In operation, the electrolyte is circulated at a high speed and D.C. current is made to flow from the work to the electrode while a suitable measure is taken for removing electrolytic products which impairs the stability of the electrolysis, e.g., eluated intermetallic compound, metal ions and hydrogen gas. This type of electrolytic processing apparatus is shown, for example, in Japanese Patent Laid-Open No. 71921/1986 and Japanese Patent Laid-Open No. 44228/1985.

The second-mentioned type apparatus, i.e., electric discharge processing apparatus, employs a bath of a processing liquid such as water, kerosene and so forth in which a work is disposed to oppose an electrode leaving a small gap therebetween. In operation, the work and the electrode are connected to each other so as to cause a momentary sparking discharge or a transient arc discharge between the work and the electrode, thereby processing the work by the energy of the discharge. This type of processing apparatus is shown, for example, in Japanese Patent Publication No. 26646/1985 and Japanese Patent Laid-Open No. 177819/1985.

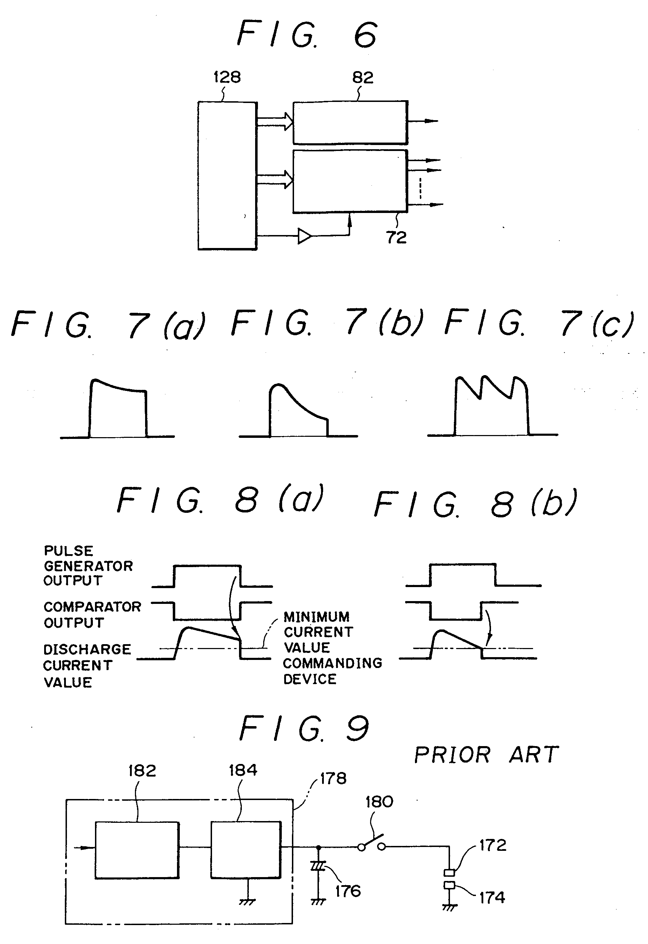

An example of this power supply system is shown in Fig. 9. This power supply system has a power source unit 178 connected to a capacitor 176 which is adapted to cause an electric discharge between an electrode 174 and a work 172. The capacitor 176 is connected at its one end to the work 172 through a discharge switch 180 and at its other end to the electrode 174 through grounding. The power supply unit 178 has a transformer 182 and a rectifier 184. An A.C. power transformed to a lower voltage by the transformer 182 is rectified by the rectifier 184 and the resulting D.C. power is used to charge up the capacitor 176. As the discharge switch 180 is closed, an electric discharge is caused between the work 172 and the electrode 174 so as to machine or process the work 172.

Power supply systems are also known from Japanese Patent Laid-Open No. 3532/1985, by which an auxiliary capacitor is provided so as to enable the charging voltage to be varied. Another apparatus is disclosed in Japanese Patent Laid-Open No. 59097/1985, by which a second capacitor is provided for controlling the charging voltage at a constant level. Japanese Patent Laid-Open No. 38819/1986 discloses a plurality of capacitors of different capacitances for selective use so as to provide different discharge voltages.

These known power supply systems generate a noise pulse when a large discharge current is produced, since the processing is conducted by electric discharge from a single capacitor at a time.

In order to control the quantity of charges discharged between the work and the electrode, it is necessary to impart a voltage drop to the discharge switch by connecting a resistance in series to the discharge switch. In consequence, power is consumed wastefully. The state of the surface of the work processed by an electrolytic processing apparatus depends on various factors such as current density, work gap and density of the processing liquid. When one of these factors is failed, in particular when the current density has come down below a predetermined level, the processing precision is impaired so that the desired degree of luster is failed. Hitherto, various measures have been taken for the purpose of ensuring a sufficiently large margin of the processing conditions so as to obtain a quantity of the electrostatic charge large enough to conduct the processing. For instance, it has been proposed to set the charging voltage at a level higher than a predetermined level. It has also been proposed to reduce the length of time over which the discharge is conducted. A setting of the charging voltage at a high level, however, causes the electric current density to increase to an impractically high level at the peak of the discharge current. On the other hand, the reduced time length of the discharge causes the number of discharging cycles for a given amount of processing to increase, with the result that the processing time is increased undesirably.

The electrolytic processing apparatus in general suffers from the following vital defect. Namely, it is impossible to obtain a uniform flow velocity of the electrolyte through the gap between the electrode and the work, when the work has a complicated shape such as a three-dimensional recess with bottom. In addition, different levels of concentration of the electrolytic products are developed between the inlet and outlet side even when a large pressure of the electrolyte is applied to the discharge gap. This means that different portions of the discharge gap produce different processing conditions, even if the discharge current is developed uniformly over the whole area of the gap. In consequence, it becomes difficult to transfer the electrode precisely to the work and, hence, to obtain a high precision of the processed work surface.

On the other hand, the electric discharge processing apparatus in general exhibits a comparatively high level of efficiency in the range of fineness of the work surface in terms of roughness (Rmax) of up to 20 µm. For attaining a higher degree of surface fineness, it is necessary to employ a very small processing current of less than 1A. In consequence, the processing time is impractically long, particularly when the work has a large surface to be processed. When the area of the processed surface is large, the electrostatic capacitance between the work surface and the electrode is increased so that it becomes difficult to control the discharge current, with the result that the desired level of the surface fineness is missed.

In ordinary discharge processing making use of an insulating oil, the processed surface usually has a hardened surface layer which is minutely cracked to a large depth. On the other hand, wire discharge processing making use of pure water generates a softened layer. Therefore both types of electric discharge processing cannot provide the desired quality of the surface. When the product surface is required to have a high degree of precision or extended life, lapping and other surface polishing operation is conducted. Thus, much time and labor are required for finishing the surface after the electric discharge processing.

In order to eliminate these problems of the known apparatus, the present applicant has proposed in Japanese Patent Application No. 27616/1987 an electrolytic finishing processing in which the power supply system provides pulses of a low current density in the beginning portion of the finishing process and pulses of a high current density in the later portion of the finishing process. In some cases, pulses of a high current density are intermittently applied to the work surface in order to remove any film. More specifically, a plurality of discharge switches connected between a plurality of capacitors and the work are simultaneously turned on so that electric discharges take place from all the capacitors in order to develop a predetermined current density of pulses between the electrode and the work.

In this type of electric power supply system all the capacitors which have large capacitances are caused to discharge by the simultaneous closing of all the discharge switches regardless of whether the pulses are supplied at the low current density or at the high current density. In this system therefore a long switching time is required for charging up the capacitors when switching the current density from low to high. In consequence, the processing time is impractically prolonged and the smooth switching of the pulses is often failed.

### SUMMARY OF THE INVENTION

Accordingly, an object of the present invention is to provide a power supply system of an electrolytic processing apparatus, capable of suitably controlling and maintaining electric charges discharged between an electrode and a work which oppose each other across a processing liquid while reducing noise generated in the power supply side so as to diminish any unfavorable effect which may otherwise be caused on the surrounding environment.

Another object of the present invention is to provide a power supply system of an electrolytic processing apparatus capable of controlling the amount of charges discharged between a work and an electrode for finishing a complicated work surface such as one of three-dimensional shape in a short time and with a high degree of precision.

Still another object of the present invention is to provide a power supply system of an electrolytic processing apparatus capable of efficiently conducting electric discharges from a plurality of capacitors in accordance with the current density of processing pulses to be supplied, for finishing a complicated work surface such as one of three-dimensional shape in a short time and with a high degree of precision, thereby producing a mirror-finished luster surface.

These objects are solved by the features of claim 1.

Further embodiments of the invention are defined in the dependent claims.

Examples of the present invention will become clear from the following description of the embodiments considered in combination with the drawings.

### BRIEF DESCRIPTION OF THE DRAWINGS

Figs. 1 to 8 show a first embodiment in which:
Fig. 1 is a schematic illustration of a power supply system;
Fig. 2 is a circuit diagram of a power supply section and a charging section;
Fig. 3 is a circuit diagram of a discharging section and a control section;
Figs. 4 and 5 are illustrations of modifications of the first embodiment, wherein

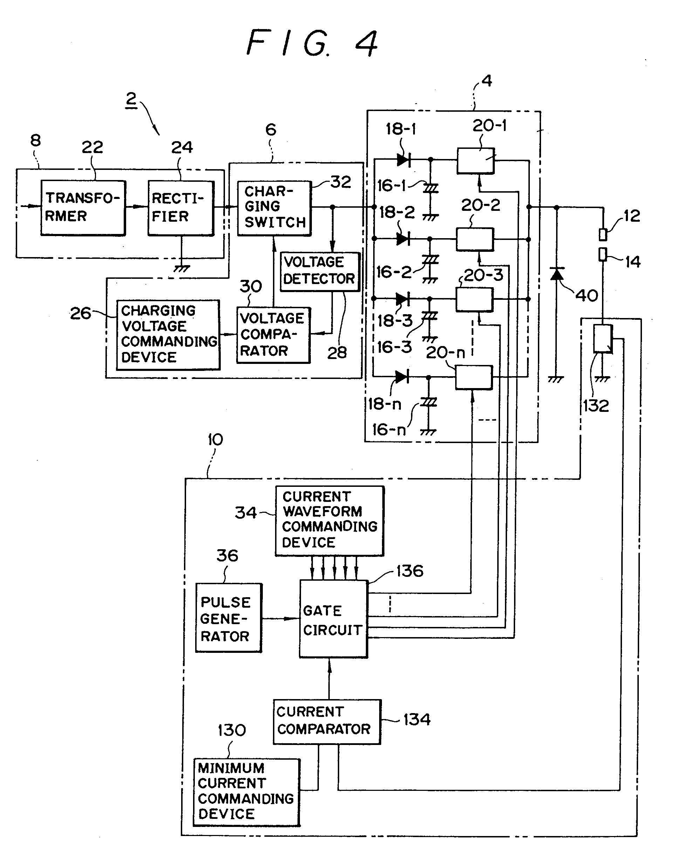

Fig. 4 is a schematic illustration of the power supply system; and

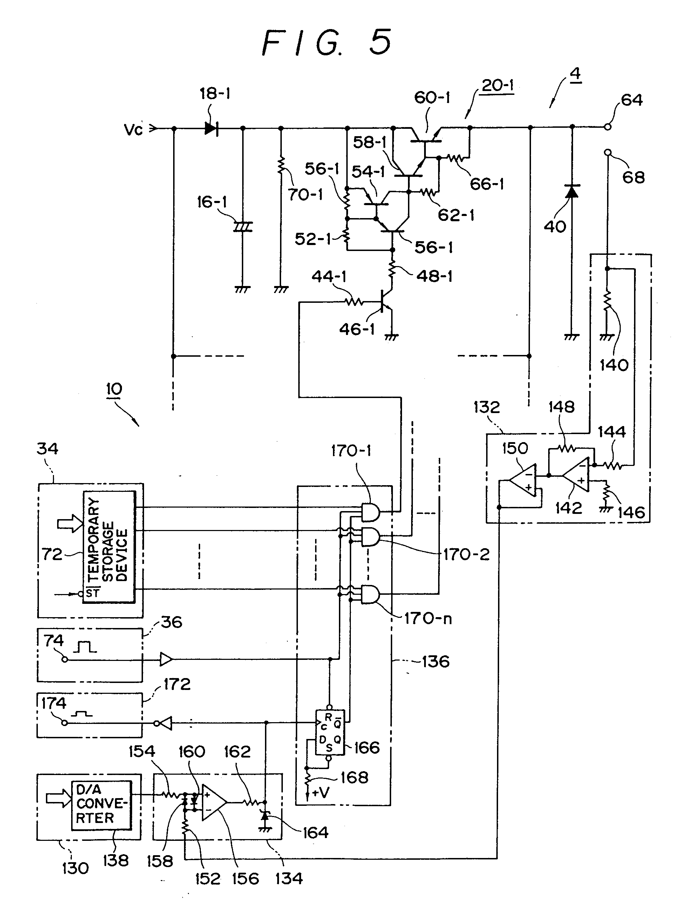

Fig. 5 is a circuit diagram of a discharge section and a control section;
Fig. 6 is a schematic illustration of a power supply system incorporating an arithmetic operation unit;
Figs. 7(a), 7(b) and 7(c) are waveform charts showing discharge current;
Figs. 8(a) and 8(b) are illustrations of the relationship between the output of a pulse generator and the discharge current; and
Fig. 9 is a schematic illustration of a conventional power supply system.

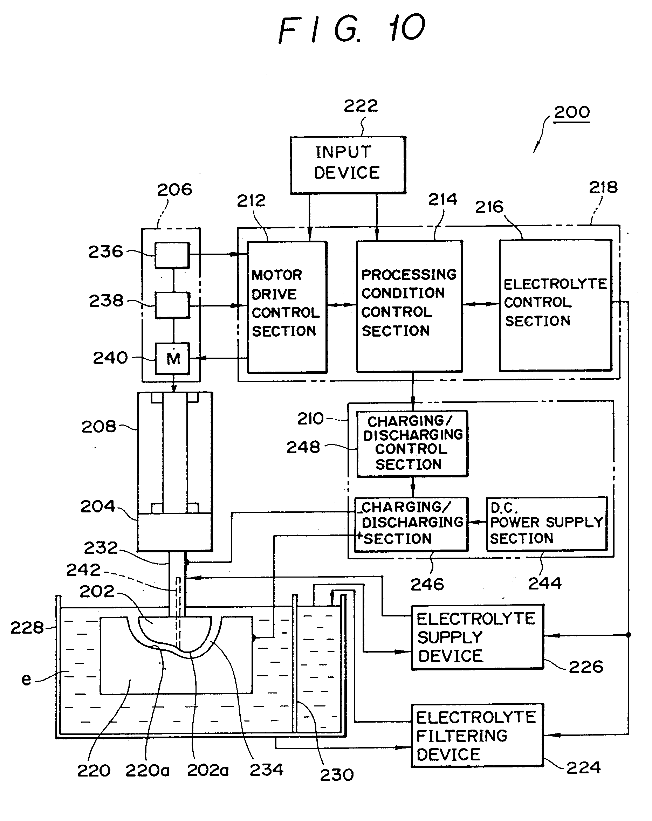

Figs. 10 to 15 is an illustration of a second embodiment in which:
Fig. 10 is a schematic illustration of an electrolytic processing apparatus;

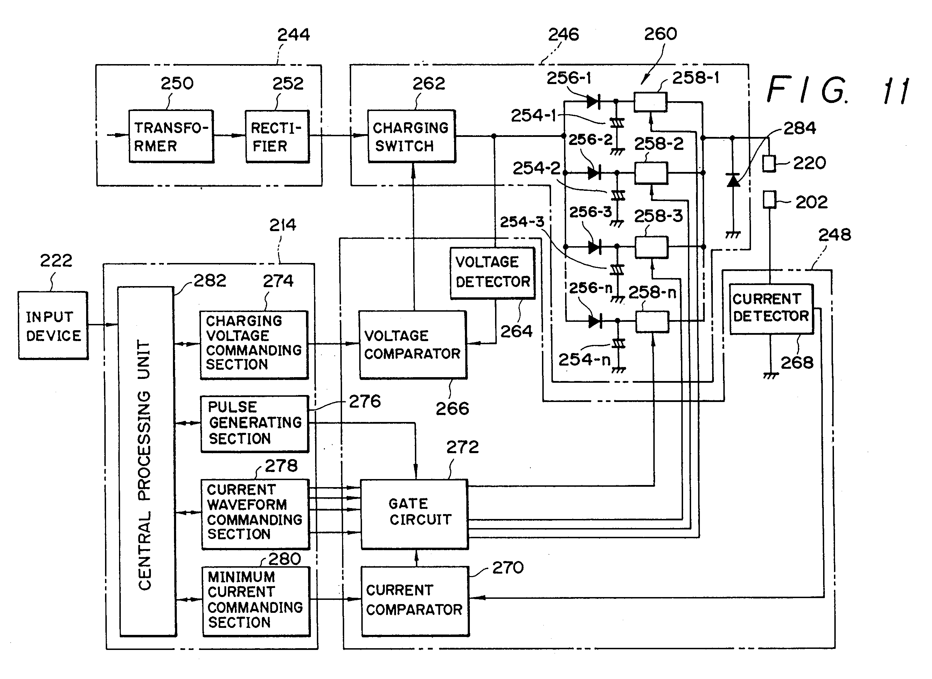

Fig. 11 is a block diagram of a power supply system;

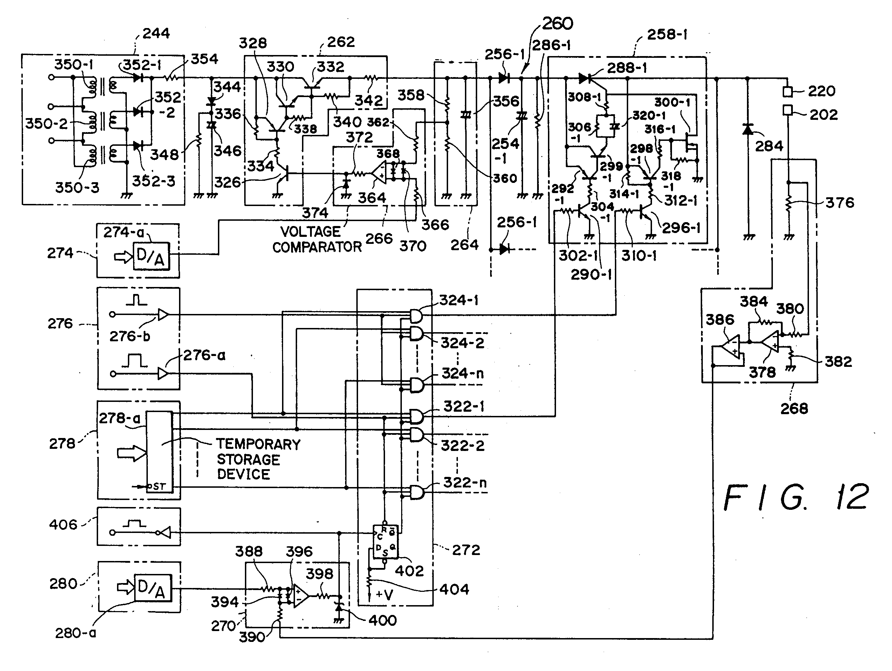

Fig. 12 is a circuit diagram of the power supply system;

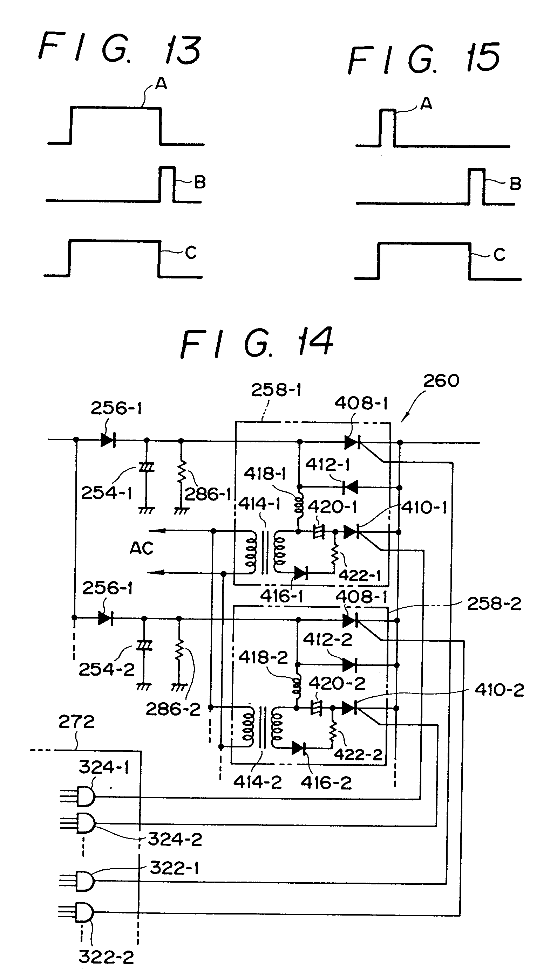

Fig. 13 is an illustration of the operation of a discharge switch;
Fig. 14 is an illustration of a different example of the discharge switch; and
Fig. 15 is an illustration of the operation of the discharge switch shown in Fig. 14.

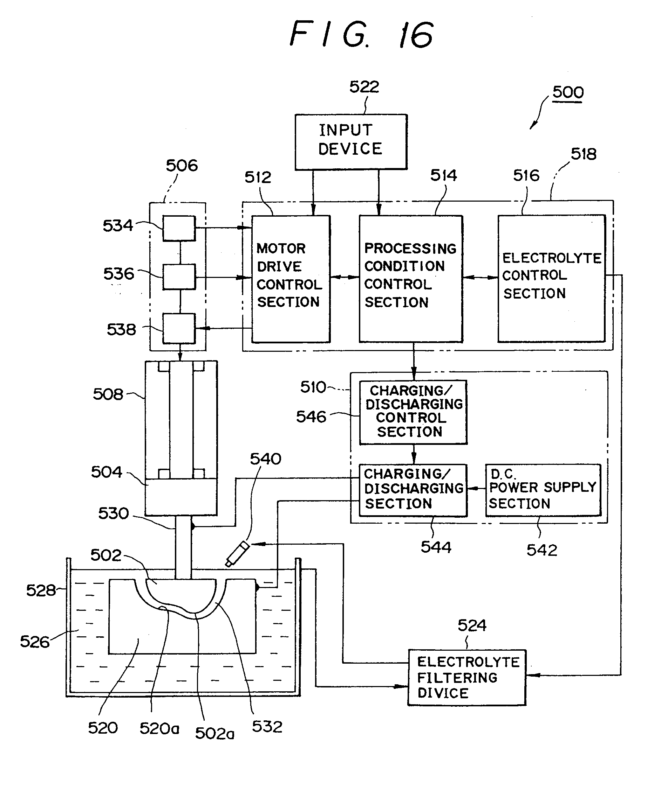

Figs. 16 to 19 are illustrations of a third embodiment of the present invention in which:
Fig. 16 is a schematic illustration of an electrolytic processing apparatus;

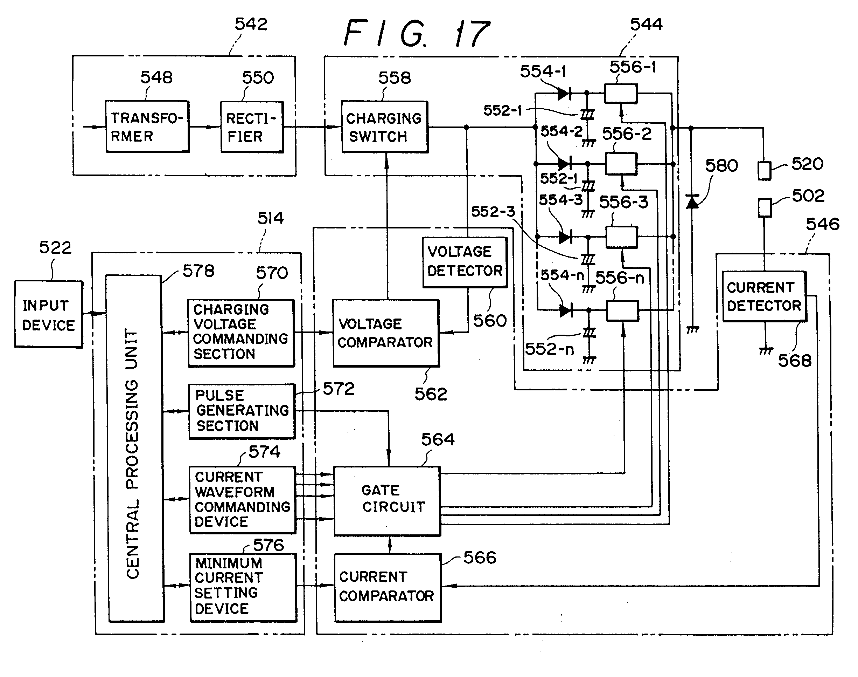

Fig. 17 is a block diagram of a power supply system of the electrolytic processing apparatus;

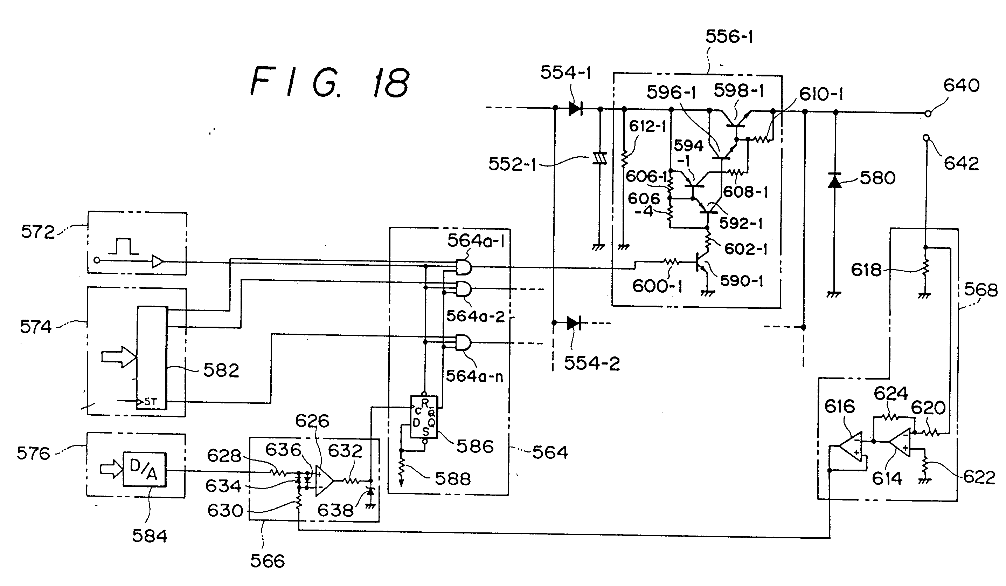

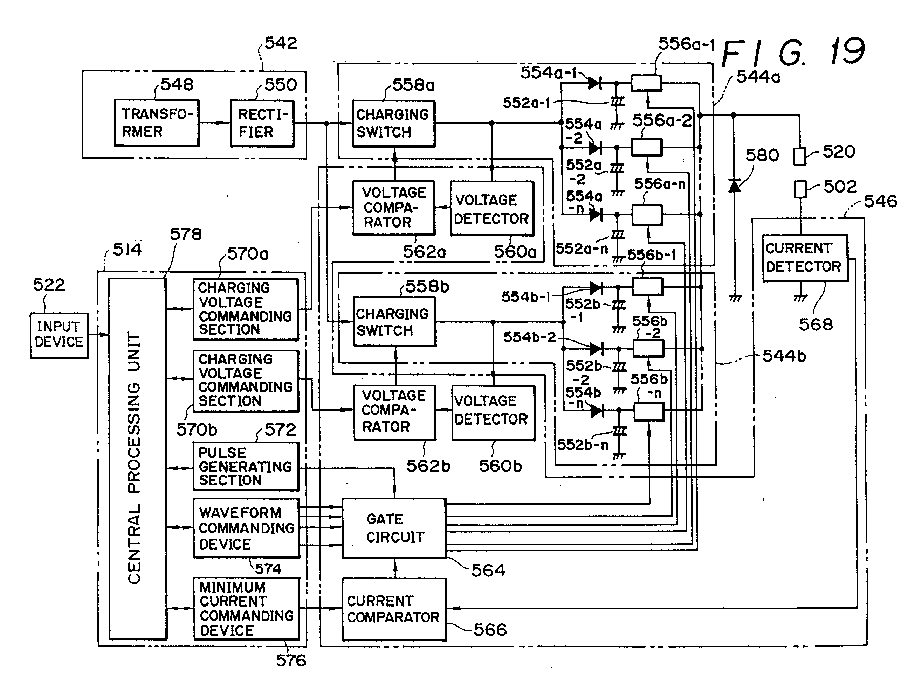

Fig. 18 is a circuit diagram of an essential portion of the system shown in Fig. 17; and Fig. 19 is a block diagram of a modification of the third embodiment.

### DESCRIPTION OF THE PREFERRED EMBODIMENTS

Embodiments of the present invention will be described in the following with reference to the drawings.

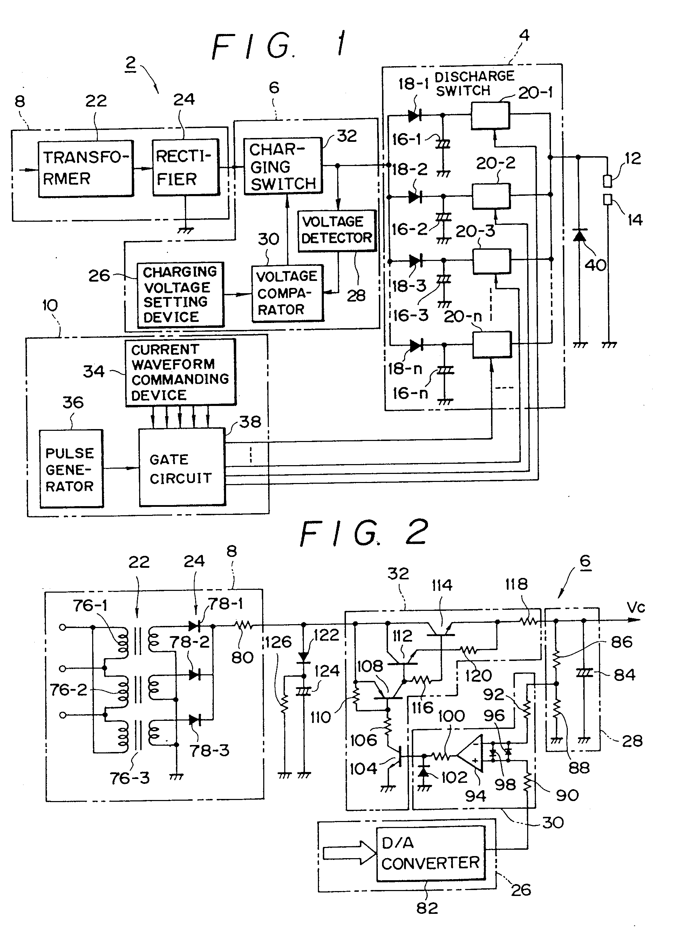

Figs. 1 to 8 show a first embodiment. As will be seen from Fig. 1, the power supply unit of the invention has a discharge unit 4, a charging section 6, a power source unit 8 and a control section 10.

The discharge unit 4 has a plurality of capacitors 16-1 to 16-n connected in parallel between a work 12 and an electrode 14 which are arranged to oppose each other across a processing liquid. To the capacitors 16-1 to 16-n rectifiers 18-1 to 18-n are connected for preventing electric currents from reversing to the power source side and discharge switches 20-1 to 20-n for allowing the charges in the respective capacitors to be discharged. The power source unit 8 is constituted by a transformer 22 and a rectifier 24. A reduced voltage obtained through the transformer 22 is rectified by a rectifier 24 in order to become a D.C. current which is supplied to the capacitors 16-1 to 16-n.

The charging section 6 has a charging voltage commanding device 26 for setting the command levels of voltages for charging up the capacitors 16-1 to 16-n, a voltage detector 28 for detecting the charging voltages supplied to the capacitors 16-1 to 16-n, a voltage comparator for conducting comparison between the command charging voltage and the charging voltage detected by the voltage detector 28, and a charging switch 32 for charging the capacitors 16-1 to 16-n in accordance with the signal from the voltage comparator 30.

The control section 10 has a waveform commanding device 34 for setting a command of the waveform of the discharge current between the electrode 14 and the work 12 which face each other across the processing liquid, a pulse generator 36 for generating pulses of discharged charges having a predetermined pulse width or duration, and a gate circuit 38 which produces signals for selectively opening and closing the discharge switches 20-1 to 20-n in accordance with the outputs from the waveform commanding device 34 and the pulse generator 36, thereby allowing charges to be transferred from selected capacitors to the discharge side.

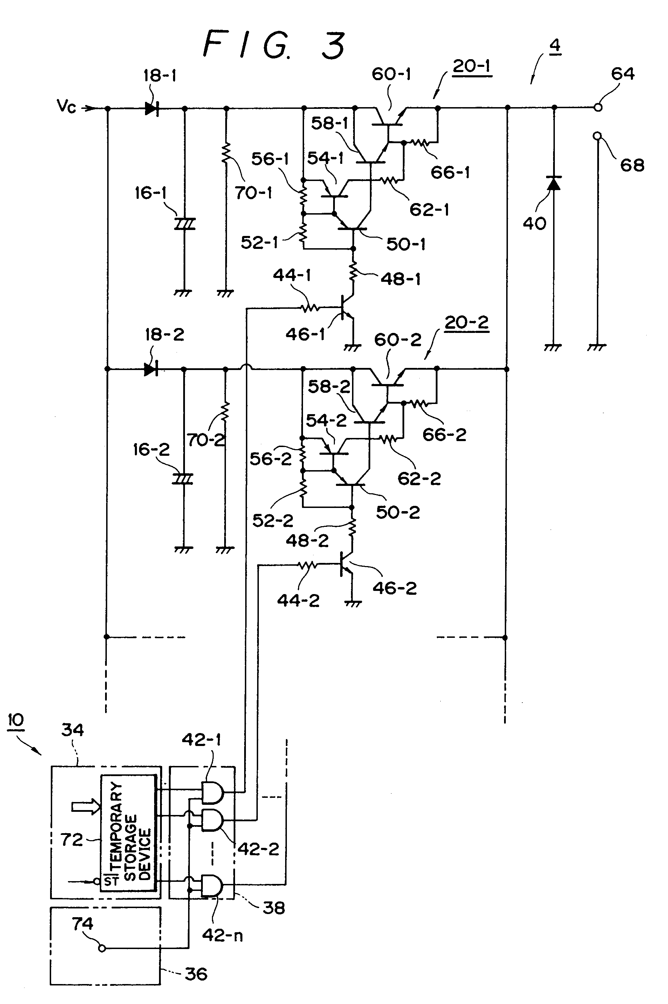

A reference numeral 40 denotes a rectifier for preventing the discharge switches 20-1 to 20-n from being broken down by back electromotive force which is produced when each of the discharge switches 20-1 to 20-n is opened. As shown in Fig. 3, the discharge section 4 includes rectifiers 18-1 to 18-n for preventing backward flow of electric current connected to the source side of the capacitors 16-1 to 16-n and discharge switches 20-1 to 20-n connected to the discharge sides of these switches. Each of the discharge switches 20-1 to 20-n provides connection between each AND gate 42-1 to 42-n in the gate circuit 38 of the control section 10 to the base of each transistor 46-1 to 46-n through one of resistors 44-1 to 44-n. Each of the transistors 46-1 to 46-n has an emitter which is grounded and a collector which is connected through one of the resistors 48-1 to 48-n to the base of one of the transistors 50-1 to 50-n. The base and the emitter of each of the transistors 50-1 to 50-n are connected to each other through one of the resistors 52-1 to 52-n. The emitter of each of the transistors 50-1 to 50-n is connected to the base of one of transistors 54-1 to 54-n. The base and the emitter of each of transistors 54-1 to 54-n is connected to each other through one of the resistors 56-1 to 56-n. The transistors 54-1 to 54-n are connected at their emitters to the discharge sides of the respective capacitors 16-1 to 16-n.

The bases of the transistors 50-1 to 50-n as well as the bases of the transistors 54-1 to 54-n are connected to the bases of the transistors 58-1 to 58-n respectively. The transistors 58-1 to 58-n have collectors connected to the discharge sides of the capacitors 16-1 to 16-n and emitters connected to the bases of the transistors 60-1 to 60-n. The emitter and the base of each of the transistors 60-1 to 60-n are connected to each other through one of the resistors 62-1 to 62-n. The collectors of the transistors 60-1 to 60-n are connected to the discharge sides of the capacitors 16-1 to 16-n, whereas the emitters of the same are connected to the work terminals 64. The emitters are connected to the bases of the same transistors through resistors 66-1 to 66-n. The discharge switches 20-1 to 20-n are adapted for operating in accordance with the opening and closing driving signals from the gate circuit 38 in order to turn the transistors 46-1 - 46-n and 60-1 - 60-n successively, thereby allowing the capacitors 16-1 to 16-n to discharge. A reference numeral 68 denotes an electrode terminal, and 70-1 to 70-n denote resistors connected in parallel to the capacitors 16-1 to 16-n.

As will be understood from Fig. 3, the control section 10 is arranged to connect a temporary storage device 72 of the waveform setting device 34, as well as the output terminal 74 of the pulse generator 36, to the AND gates 42-1 to 42-n of the gate circuit 38. Upon receipt of both an output from the temporary storage device 72 of the waveform setting device 34 and an output from the output terminal 74 of the pulse generator 36, each of the AND gates 42-1 to 42-n of the gate circuit 38 operates to enable the transistors 46-1 - 46-n and 60-1 - 60-n of the discharge switches 20-1 to 20-n to be turned on, thereby causing, the chargers 16-1 to 16-n to discharge.

As shown in Fig. 2, the power supply unit 8 transforms each of the three phases into lower voltage by means of the coil 76-1 to 76-3 and each phase of the current of the reduced voltage is rectified by each of the rectifiers 78-1 to 78-3. The D.C. output from these rectifiers is output through a resistor 80.

The construction of the charging section will be explained with reference to Fig. 2. The charging voltage setting device 26 has a D/A converter 82 through which a signal indicating the commanding charging voltage is output. The voltage detector 28 has a capacitor 84, one end of which is grounded, and a series connection of a pair of resistors 86, 88 which is connected in parallel with the capacitor 84. The divided potential or voltage divided by the series connection of resistors 86, 88 is output as the charging voltage value. The output of the charging voltage commanding device 26 and the output of the voltage detector 28 are connected through resistors 90 and 92, respectively, to inputs of a comparator 94 of a voltage comparator 30. Rectifiers 96 and 98 are connected between the resistors 90, 92 and the comparator 94. A resistor 100 is connected to the output of the comparator 94. A rectifier 102 having one grounded end is connected to the resistor 100 which is also connected to the base of the transistor 104 of the charging switch 32.

The charging switch 32 provides, through a resistor 106, a connection between the base of the transistor 108 and the collector of the transistor 104, the emitter of which is grounded. The emitter and the base of the transistor 108 are connected to each other through a resistor 110. The emitter of the transistor 108 is also connected to the output side of the power source unit 8. The collector of the same transistor 108 is connected to the base of the transistor 112. The transistor 112 has a collector which is connected to the output side of the power source unit 8, and an emitter connected to the base of the transistor 114. The emitter and the base are connected to each other through a resistor 116. The transistor 114 has a collector connected to the output side of the power source unit 8 and an emitter connected through a resistor 118 to the voltage detector 28. The emitter and the base of the transistor 114 are connected to each other through a resistor 118. The emitter and the base are connected to each other through a resistor 120. A rectifier 122 for protecting the charging switch 32 has one end connected to the juncture between the power source unit 8 and the charging switch 32 and the other end, which is grounded, through a capacitor 124 and a resistor 126. The charging section 6 is adapted to turn on and off the transistors 104 to 114 of the respective charging switches in accordance with the output of the voltage comparator 30 which compares the command charging voltage commanded by the charging voltage setting device 26 and the charging voltage detected by the voltage detector 28. In consequence, the supply of the electricity from the power source unit 8 is selectively cut off, whereby the capacitors 16-1 to 16-n are charged up to the desired voltage.

The charging voltage setting device 26 of the charging section 6, the current waveform commanding device 34 and the pulse generator of the control section 10 are connected to a microcomputer 128 as an arithmetic processing device, so that the memory device and the computing capacity of the microcomputer are utilized.

The operation of this first embodiment will be described as follows.

The power supply system 2 having the described construction can be used as the power supply for various types of processing apparatus. One typical example of such an apparatus is an electrolytic processing apparatus, in which the charges from the capacitors are discharged across a gap between a work 12 and an electrode which face each other through an electrolyte, so that the work 12 is electrolytically eluted in order to be processed. Another typical example is an electric discharge processing apparatus in which the charges from the capacitors 16 are discharged across the gap between a work and an electrode which oppose each other through a processing liquid, so that the work is molten and evaporated.

In the use of the power supply system in one of such apparatus, a charging voltage is set for the capacitors 16-1 to 16-n by means of the charging voltage setting device 26. At the same time, waveforms are set by the waveform commanding device 34 taking into account various factors such as the area over which the work 12 and the electrode 14 oppose each other, the gap between the electrode 14 and the work 12, the density of the processing liquid, the duration of the discharge, and so forth.

The D.C. voltage of a predetermined voltage obtained through the transformer 22 and the rectifier 24 of the power source unit 8 is supplied to the capacitors 16-1 to 16-n. The charging section 6 detects the charging voltage of the capacitors 16-1 to 16-n by means of the voltage detector 28 and the thus detected charging voltage is compared by a voltage comparator 30 with the command voltage set by the charging voltage setting device 26. When the detected charging voltage is below the set charging voltage, the transistors 104 to 114 of the charging switch 32 are turned on so that the electricity is supplied from the power source unit so as to charge up the capacitors 16-1 to 16-n. When the detected charging voltage is higher than the command charging voltage, the transistors 104 to 114 of the charging switch 32 are turned off in order to cut off the power from the power source unit 8, whereby the charging of the capacitors 16-1 to 16-n is completed.

The discharge from the capacitors 16-1 to 16-n is controlled by the control section 10. The control section 10 operates such that the output from the temporary storage device 72 of the waveform commanding device 34 and the output from the pulse generator 36 are received by the AND gates 42-1 to 42-n of the gate circuit 38. Upon receipt of the outputs from the waveform commanding device 34 and the pulse generator 36, the AND gates 42-1 to 42-n operate so that the transistors 46-1 to 46-n of the discharge switches 20-1 to 20-n are selectively turned on, whereby the capacitors 16-1 to 16-n discharge selectively.

This in turn causes the charges to be discharged across the gap between the work 12 and the electrode 14 through the processing liquid, whereby the work 12 is processed by electrolytic elution or by melting and evaporation.

The control section 10 is adapted to deliver opening/closing driving signals to the selected discharge switches 20-1 to 20-n in accordance with the signal input to the gate circuit 38 from the waveform commanding device 34 and the pulse generator 36. The control section 10 is also capable of changing the waveform command set in the waveform commanding device 34 even during discharging. It is therefore possible to discharge the charges of the capacitors 16-1 to 16-n in any desired waveform, as shown in Figs. 7(a), 7(b) and 7(c), whereby the amount of charge/discharge can be varied freely and easily.

Consequently rectifiers 18-1 to 18-n for preventing a reversal of current to the power source side are connected to the power source sides of the respective capacitors 16-1 to 16-n. There is no risk for the electric current to rush back into a specific capacitor, even if the capacitors 16-1 to 16-n have different voltages. In consequence, it is possible to avoid concentration of load to a specific discharge switch.

The timing of start-up of the discharge switches 20-1 to 20-n fluctuates. Assuming here that the rectifiers 18-1 to 18-n are omitted, when some or all of the discharge switches are turned on simultaneously, the load will be concentrated to that one of the discharge switches 20-1 to 20-n which has been turned on first of all. In the described embodiment the tendency for the current to rush into the capacitor of the switch started first of all from other capacitors is prevented by the provision of the rectifiers 18-1 to 18-n. It is assumed here that the discharge switch 20-i has been turned on as the first of all the switches. In consequence, the discharge takes place only from the capacitor 16-i associated with this switch, so that the voltage of the capacitor 16-i is reduced exponentially, thereby causing a correspondingly exponential decrease in the discharge current. Then, as the time elapses, other capacitors of high voltage, which have not discharged yet, commence to discharge, so that the voltage is temporarily raised at the load side with the result that the discharge from the capacitor 16-i is temporarily stopped. The discharge current from this capacitor 16-i starts to flow again as the voltage of the load side is progressively decreased. It is thus possible to reduce the closing/breaking capacity of the discharge switch, compared with the case where there is no rectifier such as rectifiers 18-1 to 18-n on the source sides of the respective capacitors.

In the operation of an electrolytic processing apparatus the charges from the capacitors 16-1 to 16-n are discharged across the gap between the work 12 and the electrode 14 which oppose each other through the electrolyte in order to elute the work electrolytically. In this case, the step of ejecting processing dusts is conducted repeatedly after the step for processing the work 12 by electrolytic elution by the discharge of the charges. Thus, the period for discharging the processing dusts is longer than the period for electrolytic processing effected by the discharge. It is therefore possible to charge up the capacitors 16-1 to 16-n by means of the charging section 16 by making an efficient use of the period for discharging the processing dusts.

It will be understood that the charging current supplied from the power source unit 8 is limited at a level which is necessary for charging up the capacitors 16-1 to 16-n, even if the discharge from the capacitors 16-1 to 16-n is effected at a large rate to produce a large discharge current. This conveniently reduces the level of the transient current and, hence, reduces the level of the noise generated at the source side, thereby eliminating any unfavorable effect on the surrounding environment.

Figs. 4 and 5 illustrate a modification of the first embodiment.

This modification shows the following constructional features of the control section 10. As in the case of the first embodiment described before, the control section 10 has a current waveform commanding device for setting a command waveform of the current discharged across the gap between the work 12 and the electrode 14 which oppose each other through the processing liquid, and a pulse generator 36 for generating discharge pulses of a predetermined pulse width or duration.

In this second embodiment, the control section 10 further has a minimum current commanding device 130 for setting the command of the smallest value of the discharge current formed across the gap between the work 12 and the electrode 14, a discharge current detector 132 for detecting the value of the current of charges discharged across the gap between the work 12 and the electrode 14, and a current comparator 134 for comparing the minimum current value set by the minimum current value commanding device 130 with the discharge current detected by the discharge current detector 132. The control section 10 further has a gate circuit 136 which is adapted to operate upon receipt of the outputs from the current waveform commanding device 34, the pulse generator 36 and the current comparator 134. More specifically, the gate circuit delivers the opening/closing driving signal to the discharge switches 20-1 to 20-n in order to allow the charges of the capacitors 16-1 to 16-n to be discharged from the discharge side when the detected current value is above the command current level, and to stop the discharge of the charges from these capacitors 16-1 to 16-n when the detected current value is below the command current value.

Referring to Fig. 5, the minimum current commanding device 130 is adapted to output the set minimum current after D/A conversion through a D/A converter 138. The discharge current detector 132 is provided with a resistor 140 connected to the grounding side of the electrode terminal 68. The end of the resistor 140 adjacent to the electrode terminal 68 is connected to one of the inputs of the amplifier 142 through a resistor 144. The other input of the amplifier 142 is grounded through a resistor 146. The output of the amplifier 142 is connected through a resistor 148 to the input thereof connected to the resister 144. The output is also connected to one of the inputs of the amplifier 150. The amplifier 150 has an output which is connected to the other input thereof, and detects and outputs the discharge current formed by the charges discharged.

The output of the D/A converter 138 of the minimum current commanding device 130 and the output of the amplifier 150 of the discharge current detector 132 are connected to the inputs of a comparator 156 of the current comparator 134, through resistors 152 and 154, respectively. Rectifiers 158 and 160 are connected between the respective resistors 152, 154 and the comparator 156. To the output of the comparator 156 a resistor 162 is connected which is connected to a voltage regulator 164 grounded at its one end. The output is also connected to the trigger terminal of the D-type flip-flop 166 of the gate circuit 136.

The other input of the flip-flop 166 of the gate circuit 136 and the set input are pulled up by the power supply through the resistor 168. The reset input is connected to the output terminal 74 of the pulse generator 36. The gate circuit 136 has AND gates 170-1 to 170-n to which there are connected the output of the temporary storage device 72 of the electric current waveform commanding device 34, the output of the pulse generator 36, and the output of the flip-flop 166. The AND gates 170-1 to 170-n are adapted to actuate the discharge switches 20-1 to 20-n in order to open and close the same, in order to control the discharge in accordance with the signals derived from the temporary storage device 72 of the waveform commanding device 34, the output of the pulse generator 36, and the flip-flop 166. More specifically, when, as in Fig. 8(a), the electric current detected by the discharge current detector 132 is higher than the minimum current value set by the minimum current commanding device 130, the transistors 46-1 to 46-n of the discharge switches 20-1 to 20-n are selectively turned on to discharge the charges from the capacitors 16-1 to 16-n, thereby enabling the capacitors 16-1 to 16-n to discharge. Conversely, when the current value detected by the discharge current detector 132 is below the level of the current set by the minimum current commanding device 130 as shown in Fig. 8b, the transistors 46-1 to 46-n of the discharge switches 20-1 to 20-n are turned off so as to stop the discharge from the capacitors 16-1 to 16-n.

Therefore, in luster finishing of the processed surface by, for example, an electrolytic processing apparatus, the discharge of the charges is stopped when the value of the discharge current has come down below the necessary minimum current value, so that the rate of discharge of the charges can be maintained above a predetermined level. This in turn eliminates the necessity for the discharge current to be set with a large margin. It is therefore possible to obviate problems of the prior art such as an excessively large current density which would occur at the peak when the charging voltage is set high, and a prolonged processing time due to employment of a number of discharge cycles required when the duration of each discharge cycle is determined to be short. The processing time can be detected by inputting and accumulating the pulse widths generated by the pulse generator 36 to the input terminal 174 of the feedback circuit 172, as shown in Fig. 5. With this feedback circuit 172 it is possible to detect any abnormality taking place during processing, by comparing the pulse width of the pulse output from the pulse generator 36 and that of the input pulse.

Figs. 10 to 15 illustrate a second embodiment. Referring to Fig. 10, the electrolytic processing apparatus 200 has the following parts: an electrode fixing device 204 to which the electrode 202 is fixed; a driving converter 208 for converting the rotational movement of an electrode driving section 206: a power supply device 210 for generating a pulse current; a control device 218 composed of a motor drive control section 212, a processing condition control section 214 and an electrolyte control section 216; an input device 222 for inputting data concerning the work 222; an electrolyte filtering device 224; an electrolyte supplying device 226; a processing cell 228; and an electrolyte reservoir 230 provided in the processing cell 228.

The electrode fixing device 204 has a rod 232 to the lower end of which an electrode 202 is connected consisting of, for example, a pure copper, used in the discharged processing of the work 220 and having an electrode surface 202a which opposes the processed surface 220a of the work 220 with a uniform gap all in three-dimensional directions. The electrode fixing device 204 is movable up and down in such a manner that it maintains a constant value of the gap 234 by the electrode driving section 206 through the driving converter 208. More specifically, a rotary encoder 236 and a tacho-generator 238 of the electrode driving section 206 produce signals which are delivered to the control device 218 so that a control signal is emitted from the motor driving control portion of the controller 218 to control the motor 240 rotatingly. The rotational movement produced by the motor 240 is converted into a reciprocatory motion by means of the driving converter portion 208, so that the electrode fixing device 208 is moved up and down to maintain the constant gap 234 between the electrode surface 202a and the work surface 220a.

The input device 222 is adapted for inputting signals representing data such as the material and the surface area of the work 220, finishes the margin, the grade of the dimensional precision, surface roughness and the processing electrode gap, and delivers these signals to the motor driving control section 212 and the processing condition control section 214 of the control device 218.

The electrolyte filtering device 224 and the electrolyte supplying device 226 filtrates the electrolyte containing electrolytic products produced during the processing. The filtrated electrolyte is jetted in accordance with the control signal from the electrolyte control section 216 through a supply port 242 formed in the rod 232 into the gap 234 at a constant liquid pressure, thereby removing the electrolytic products generated between the work surface 220a and the electrode surface 202a during the processing.

The power supply system 210 is adapted to supply a pulse current of a current density (current value per unit area) of 70A/cm² or less across the gap between the work 220 and the electrode 202. More specifically, the power supply system 210 is adapted for producing a pulse current of a predetermined density computed in accordance with the surface area of the work, in accordance with the control signal from the processing condition control section 214. The power supply unit 210 has a D.C. power supply portion 244, charging/discharging section 246 and a charging/discharging control section 248. An example of the construction of the power supply system 210 is shown in Figs. 11 and 12.

Referring now to Fig. 11, the D.C. power supply portion 244 has a transformer 250 and a rectifier 252. An A.C. current of a voltage reduced by the transformer 250 is supplied to the rectifier 252 which produces a D.C. current delivered to capacitors 254-1 to 254-n mentioned in the following.

The charging/discharging section 246 includes a discharge section 260 composed of the capacitors 254-1 to 254-n adapted for causing electric discharge across the gap between the work 220 and the electrode 202, diodes 256-1 to 256-n connected to the capacitors 254-1 to 254-n and adapted for checking the reversing of the charge to the D.C. power source section 244, and discharge switches 258-1 to 258-n adapted to be turned on and off to allow the charge from the capacitors 254-1 to 254-n thereby enabling these capacitors to selectively discharge. The charging/discharging section 246 also includes a charging switch 262 which is adapted to cut-off the supply of the electric current from the D.C. power supply unit 244 selectively to charge the capacitors 254-1 to 254-n to a desired level. More specifically, in the discharge section 260 the capacitors 254-1 to 254-n, diodes 256-1 to 256-n and the discharge switches 258-1 to 258-n are connected in parallel, so that the discharge switches 258-1 to 258-n are turned on and off in accordance with the control signal from a later-mentioned charging/discharging control section 248.

The charging/discharging control section 248 includes the following parts: a voltage detector 264 for detecting the charging voltage supplied to the capacitors 254-1 to 254-n; a voltage comparator 266 adapted to compare the command charging voltage set by the charging voltage commanding section 274 of the processing condition control section 214 and the charging voltage detected by the voltage detector 264; a current detector 268 for detecting the current value formed by the discharged charges; a current comparator 270 for comparing the minimum current value set by the minimum current commanding section 280 of the processing condition control section 214 and the current value detected by the current detector 268; and a gate circuit 272 adapted for delivering opening/closing driving signals to the discharge switches 258-1 to 258-n, in accordance with the inputs from the pulse generating section 276 and the current waveform commanding section 278 of the processing condition control section 214 and the input from the current comparator 270, in such a manner as to allow the charges from the capacitors 254-1 to 254-n to be discharged when the detected current value is greater than the minimum current, whereas, when the detected current is below the minimum current, in such a manner as to stop the discharge from the capacitors 254-1 to 254-n.

Referring to Fig. 11, a reference numeral 282 denotes a computing processing unit (CPU) adapted to compute and process processing conditions in accordance with the data input through the input device 222, while a numeral 284 designates a diode which prevents the discharge switches from being broken down by the back electromotive force which is generated when each of the discharge switches 258-1 to 258-n is turned on.

Fig. 12 is a schematic circuit diagram of the arrangement shown in Fig. 11. The following description will proceed with reference to this Figure. The charging/discharging section 246 has diodes 256-1 to 256-n for preventing backward flow at the source side of the respective capacitors 254-1 to 254-n, and the discharge switches 258-1 to 258-n connected to the discharge side of the same. The charging/discharging section also has resistors 286-1 to 286-n connected in parallel with the capacitors 254-1 to 254-n. All the discharge switches 258-1 to 258-n have an identical construction so that the discharge switch 258-1 will be described by way of example.

The discharge switch 258-1 has a GTO (gate turn-off) thyristor 288-1, five transistors 290-1 to 298-1, a FET (field-effect transistor) 300-1, nine resistors 302-1 to 318-1, and a capacitor 320-1. In operation, the transistors 290-1 to 298-1 are successively turned on in accordance with the signal from the AND gate 322-1 of the gate circuit 272 of the charging/discharging control section 248, thereby turning the GTO thyristor 288-1 on, thus allowing the capacitor 254-1 to discharge. At the same time, the transistors 1901-1 to 298-1 and the FET 300-1 are turned on in accordance with the signal from the AND gate 324-1 of the gate circuit 272, thereby turning the GTO thyristor 288-1 off, whereby the discharge from the capacitor 254-1 is stopped. More specifically, referring to Fig. 13, when a signal A is received by the base of the transistor 290-1 while a signal B is received by the base of the transistor 296-1, the discharge switch 258-1 emits a signal C shown in this Figure.

The charging switch 262 has four transistors 326 to 332 and five resistors 334 to 342. The command charging voltage output from the D/A converter 274-a of the charging voltage commanding section 274 and the charging voltage detected by the voltage detector 264 are compared with each other by a voltage comparator 266. The transistors 326 to 332 are selectively turned on and off by the output of this voltage comparator 266 in order to turn on and off the power from the D.C. power source unit 244 and to charge the capacitors 254-1 to 254-n thereby to a predetermined level. In order to protect the charging switch 262, a diode 344, a capacitor 346 and a resistor 348 are connected as illustrated between the D.C. power source unit 244 and the discharging switch 262.

In the D.C. power source unit 244, each phase of an input A.C. power is transformed into lower voltage by each coil 350-1 to 352-n and the power of the reduce voltage is rectified by the diodes 352-1 to 352-n. The D.C. current obtained as a result of rectification is output through the resistor 354.

The voltage detector 264 of the charging/discharging control section 244 has a capacitor 356 which is grounded at its one side, and a series connection of a pair of resistors 358 and 360 connected in parallel to the capacitor 356, and outputs a voltage formed as a result of potential division by these resistors 358 and 360. The output of the voltage detector 264 is connected to one input of the comparator 354 of the voltage comparator 266 through a resistor 362. The other input of the comparator 364 is connected through a resistor 366 to the output of the charging voltage commanding section 274 of the processing condition control section 214. Diodes 368 and 370 are connected between the resistors 362, 366 and the comparator 364. To the output of the comparator 364 a resistor 372 is connected which is connected at its one end to a diode 374 grounded at its one end. The other end of the resistor 372 is connected to the base of the transistor 326 of the charging switch 264.

The current detector 268 has a resistor 376 on the grounding side of the electrode 3. The end of the resistor 376 adjacent to the electrode 3 is connected through a resistor 380 to one of the inputs of the amplifier 378, while the other input of the amplifier 378 is grounded through the resistor 382. The output of the amplifier 378 is connected to the input of the same amplifier connected to the resistor 380 and also to the one of the inputs of the amplifier 386. The amplifier 386 has its output connected to the other input thereof, so that it detects and outputs the value of the discharge current formed by the discharged charges. The output of the D/A converter 280-a of the minimum current commanding section 280 of the processing condition control section 214 and the output of the amplifier 386 of the current detector 268 are connected to the inputs of the comparator 392 of the current comparator 270 through resistors 388 and 390, respectively. Diodes 394 and 396 are connected, between the resistors 388 and 390 and the comparator 392, respectively. To the output of the comparator 392 a resistor 398 is connected which in turn is connected to a constant=voltage diode 400 which is grounded at its one end. The resistor 398 is also connected to the trigger terminal of a D-type flip-flop (FF) of the gate circuit 272.

The other input of the FF 402 of the gate circuit 272 and the set input are pulled up by the power supply through the resistor 404, while the reset input of the same is connected to the output terminal of the pulse generating section 276.

The gate circuit 272 has two groups of AND gates 322-1 to 322-n and 324-1 to 324-n. To the inputs of the AND gates 322-1 to 322-n and 324-1 to 324-n there are connected the temporary storage device 278-a of the waveform commanding section 278, outputs of the pulse generators 276-a, 276-b of the pulse generating section 276 and the output of the FF 402. The AND gates 322-1 to 322-n and 324-1 to 324-n are adapted for effecting the opening/closing actuation of the discharge switches 258-1 to 258-n upon receipt of signals from the temporary storage device 278-a, outputs of the pulse generators 276-a, 276-b, and the FF 402. Namely, when the current value detected by the current detector 268 is greater than the minimum current value set by the minimum current commanding section 280, the AND gates 322-1 to 322-n deliver ON signals to some or all of the transistors 290-1 to 290-n of the discharge switches 258-1 to 258-n to turn on the GTO thyristors 288-1 to 288-n, thereby causing some or all of the capacitors 254-1 to 254-n to discharge. Conversely, when the discharge current detected by the discharge current detector 268 is below the minimum current set by the minimum current commanding section 280, the AND gates 324-1 to 324-n provide ON signals to turn on the transistors 296-1 to 296-n of the discharge switches 258-1 to 258-n, thereby turning off the GTO thyristors 288-1 to 288-n, whereby the capacitors 254-1 to 254-n stop to discharge.

In Fig. 12, a reference numeral 12 designates a feedback circuit which is adapted for comparing the pulse width of the pulses output from the pulse generator 276-a with that of the input pulses, thereby detecting any abnormality of the processing.

Fig. 14 shows another example of the discharge switches 258-1 to 258-n. The construction of the discharge switch 258-1 will be described by way of example. The discharge switch 258-1 includes a pair of thyristors 408-1, 410-1, a diode 412-1 connected in parallel with the thyristor 408-1, a transformer 414-1, a diode 416-1 and the coil 418-1 which are connected to the output side of the transformer 414-1, a capacitor 420-1 and a resistor 422-1. The output of the AND gate 322-1 of the gate circuit 272 is connected to the gate of the thyristor 408-1, while the output of the AND gate 324-1 is connected to the gate of the thyristor 410-1.

Fig. 15 is an illustration of the operation of this discharge switch 258-1 to 258-n. As will be clearly understood from this Figure, the discharge switches 258-1 to 258-n of this example produce the same effect as that produced by the discharge switches 258-1 to 258-n.

The operation of the electrolytic processing apparatus 200 of this embodiment will be described with reference to a finishing process method.

For the purpose of conducting the finishing process, a work 220 formed into a desired shape by the electric discharging process, for example, is fixed to the work fixing device which is not shown. At the same time, the same electrode 202 as that used in the electric discharging process is fixed to the lower end of a rod 232 of the electrode fixing device 204. The electrode 202 is then lowered to bring its surface 202a to a position where it faces the surface 220a of the work 220 to be processed. The electrode 202 and the work 220 thus opposing each other are immersed in an electrolyte e contained in a processing cell 228. This position of the electrode 202 is stored as an origin A and the electrode 202 is raised to a position where a discharge gap input through the input device and stored in the CPU is attained. When the gap between the surface 220a to be processed and the electrode surface 202a is filled with the electrolyte e, the processing is commenced from this position.

In a beginning portion of the finishing process, the power supply system 210 delivers, in accordance with a control signal from the processing condition control section 214, pulses of a predetermined current density, e.g., 17A/cm² between the work 220 and the electrode 202 for the purpose of improving the fineness of the work surface. More specifically, the controller 218 turns on some or all of the AND gates 322-1 to 322-n of the gate circuit 272 so as to turn on the corresponding discharge switches 258-1 to 258-n, thereby effecting discharges from the corresponding capacitors 254-1 to 254-n which have been charged up with reduced current in a comparatively long charging time. As a result, the material of the work 202 is made to elute from the surface 220a, so that, after supplying pulses in one or several times, the electrolyte containing electrolytic products stagnant in the gap 234 is forcibly removed by the electrolyte which is jetted by the electrolyte supplying device 225 through the supply port 242.

After the electrolytic products are removed, the electrode 202 is lowered so that the electrode surface 202a is brought into contact with the surface 220a Then, the instant position of the electrode is compared with the above-mentioned origin A by the controller 218 so as to measure the processing depth corresponding to one processing cycle (processing by a single pulse or several pulses). Subsequently, the electrode 202 is raised again to recover the predetermined gap 234 between the surface of the work piece 220a and the electrode surface 202a, and the gap between the work surface 220a and the electrode surface 202a is filled with the electrolyte e which is the mixture of the electrolyte jetted from the processing cell 228 and the old electrolyte. When the electrode 202 has reached the predetermined position where the predetermined gap 234 is formed between the electrode surface 202a and the processed surface 220a, the electrolyte e is stationed, i.e., the flow of the electrolyte e is stopped and made still, and, after elapse of 1 to 5 seconds thereafter, pulses are supplied to commence the next processing cycle.

The described finish processing is repeated several times in accordance with the instructions given by the controller 218, and the accumulated value of the processing depth is compared with the command value of the processing depth which has been computed by the processing condition control section 214 in accordance with the input data computed by the input device 222. When the difference between the accumulated value of the processing depth and the command processing depth has come down below a predetermined value, e.g., 1µm, the mode of the pulse supplied from the power supply system 210 is switched to a luster pulse mode of a current density which is greater than 3/2 of the pulse supplied during the beginning period of the finish processing, e.g., 40A/cm². A predetermined number of processing cycles are conducted with this current density, thus completing the finishing process.

When the discharge current value has come down below the minimum current value set in the minimum current commanding device 280, the control device 218 and the charging/discharging control section 248 provide control signals so as to turn on and off some or all of the AND gates 324-1 to 324-n of the gate circuit 272, thereby turning off the corresponding discharge switches 258-1 to 258-n to stop the discharge from the corresponding capacitors 254-1 to 254-n.

Thus, in this second embodiment, some or all of the parallel discharge switches 258-1 to 258-n are selectively turned on and off in accordance with the control signals from the controller 218 and the charging/discharging control section 248. When the required current density is comparatively small, as is the case of the finishing process, 10 discharge switches, for example, e.g., discharge switches 258-1 to 258-10, are turned on. When the discharge current has come down below the minimum value during this processing, the ten discharge switches 258-1 to 258-10 are turned off to stop the discharge from the capacitors 254-1 to 254-10. It is thus possible to control the number of capacitors 254-1 to 254-n taking part in the processing, in accordance with the current density of the pulses to be employed.

The discharge switches 258-1 to 258-n are turned off immediately after the supply of the pulses to the gap between the work 220 and the electrode 202 has been ceased. This means that the charges accumulated in the capacitors 254-1 to 254-n are not completely discharged. For instance, when the finishing process is conducted by changing the pulse mode from the low current density mode to the high current density mode, the time required for the switching, including the time required for charging up the capacitors, can be shortened. Furthermore, the use of thyristor 288-1 to 288-n permits the control of large electric current, so that the power supply system of the invention can be used in finishing process conducted in a still electrolyte.

The described construction for turning on and off the discharge switch 258-1 to 258-n is only illustrative. For instance, it is possible to provide the processing condition control section 214 and the charging/discharging section 248 on a common part or to employ an OR gate as the gate circuit 272.

Figs. 16 to 19 show a third embodiment of the present invention. Referring to Fig. 16, the electrolytic processing apparatus 500 has the following parts: an electrode fixing device 504 to which the electrode 502 is fixed; a driving converter 508 for converting the rotational movement of an electrode driving section 506: a power supply device 510 for generating pulse current; a control device 518 composed of a motor drive control section 512, a processing condition control section 514 and an electrolyte control section 516; an input device 522 for inputting data concerning the work 512; an electrolyte filtering device 524; an electrolyte supplying device 526; and a processing cell 528 accommodating an electrolyte 526.

The electrode fixing device 504 has a rod 530 to the lower end of which an electrode 502 is connected consisting of, for example, a pure copper or graphite, and having an electrode surface 502a which opposes the processed surface 520a of the work 520 with a uniform gap 532 all in three-dimensional directions. The electrode fixing device 504 is movable up and down in such a manner as to maintain a constant value of the gap 532, by the electrode driving section 506 through the driving converter 508. More specifically, a rotary encoder 534 and a tacho-generator 536 of the electrode driving section 506 produce signals which are delivered to the motor control section 512 of the control device 518 so that a control signal is emitted from the motor driving control section 512 of the controller 518 to control the motor 538 rotatingly. The rotational movement produced by the motor 538 is converted into a reciprocatory motion by means of the driving converter portion 508, so that the electrode fixing device 508 is moved up and down to maintain the constant gap 532 between the electrode surface 502a and the work surface 520a.

The input device 522 is adapted to input signals representing data such as the material and the surface area of the work 520, finish margin, the grade of the dimensional precision, surface roughness and the processing electrode gap, and delivers these signals to the motor driving control section 512 and the processing condition control section 514 of the control device 518.

The electrolyte filtering device 524 filtrates the electrolyte 526 containing electrolytic products produced during the processing. The filtrated electrolyte is jetted in accordance with the control signal from the electrolyte control section 516 into the processing cell 528 at a constant liquid pressure. In addition, it controls a solenoid valve 540 and other parts to jet a fresh electrolyte 526 into the gap between the work 520 and the electrode 502, thereby removing the electrolytic products generated between the work surface 520a and the electrode surface 502a during the processing.

The power supply system 510 is adapted to supply a pulse current of a current density (current value per unit area) of 70A/cm² or less across the gap between the work 520 and the electrode 502. More specifically, the power supply system 510 is adapted for producing a pulse current of a predetermined density computed in accordance with the surface area of the work, in accordance with the control signal from the processing condition control section 514. The power supply unit 510 has a D.C. power supply portion 542, charging/discharging section 544 and a charging/discharging discharge control section 546. An example of the construction of the power supply system 510 is shown in Figs. 17 and 18.

Referring now to Fig. 17, the D.C. power supply portion 542 has a transformer 548 and a rectifier 550. An A.C. current of a voltage reduced by the transformer 548 is supplied to the rectifier 550 which produces a D.C. current delivered to later-mentioned capacitors 552-1 to 552-n.

The charging/discharging section 544 includes the capacitors 552-1 to 552-n adapted for causing electric discharge across the gap between the work 520 and the electrode 502, diodes 554-1 to 554-n connected to the capacitors 552-1 to 552-n and adapted for checking the reversing of the charge to the D.C. power supply portion 542, discharge switches 556-1 to 556-n adapted for being turned on and off to allow the charges from the capacitors selectively, and a charging switch 562 which is adapted to cut-off the supply of the electric current selectively from the D.C. power supply unit 542 to charge the capacitors 552-1 to 552-n to a desired level. As shown in Fig. 18, the discharge switches 556-1 to 556-n are composed of five transistors 590-1 to 598-1 and seven resistors 600-1 to 600-7.

The charging/discharging control section 548, which is adapted for controlling the charging/discharging section 544 includes the following parts: a voltage detector 560 for detecting the charging voltage supplied to the capacitors 552-1 to 552-n; a voltage comparator 562 adapted to compare the command charging voltage set by the charging voltage commanding section 570 of the processing condition control section 514 and the charging voltage detected by the voltage detector 560; a current detector 568 composed of two amplifiers 614, 616 and four resistors 618, 624 as shown in Fig. 18, and adapted for detecting the current value formed by the charges across the gap between the work 520 and the electrode 502; a current comparator 570 composed of a comparator 626, three resistors 628 to 632 and three diodes 634 to 638 and for comparing the minimum current value delivered from a D/A converter 584 of the minimum current commanding section 576 and the current value detected by the current detector 568; and a gate circuit 564 which will be explained later.

As shown in Fig. 18, the gate circuit 564 is provided with a plurality of AND gates 564a-1 to 564a-n, a flip-flop 586 and a resistor 588 connected to the flip-flop 586. Three inputs of each of the AND gate 564a-1 to 564a-n are connected to the output of the pulse generator 572 of the processing condition control section 514, the output of a memory section 582 of the current waveform commanding section 574 and the output of the current comparator 566, through the flip-flop 586. The gate circuit 564 is adapted for delivering opening/closing driving signals to the discharge switches 556-1 to 556-n, in such a manner as to open the AND gates 564a-1 to 564a-n selectively in accordance with a command current density (current density computed by a later-mentioned CPU in accordance with the data concerning the work 520 through the input device 522, so as to selectively allow the capacitors 552-1 to 552-n to discharge across the gap between the work 520 and the electrode 502 when the detected current value is greater than the minimum current, whereas, when the detected current is below the minimum current, in such a manner as to turn off the AND gates 564a-1 to 564a-n selectively to stop the discharge from the capacitors 552-1 to 552-n. The signals for selectively turning on the AND gates 564a-1 to 564a-n in accordance with the current density may be formed by making use of signals from the waveform commanding section 574 or the pulse generating section 572, or by means of a specific pulse generating section provided in the processing condition control section 514.

The charging/discharging control section 546 is controlled by the processing condition control section 514 of the control device 518. The processing condition control section 514 has, as shown in Fig. 17, a charging voltage commanding section 570, a pulse generating section 572, a current waveform commanding section 574, a minimum current commanding section 576, and a CPU 578 adapted for computing and processing the processing conditions in accordance with the data input through the input device 522. In Fig. 17, a reference numeral 580 denotes diodes which are intended for preventing discharge switches 556-1 to 5560-n from being broken down by back electromotive force produced when these discharge switches 556-1 to 5560-n are opened. In Fig. 18, numerals 640 and 642 denote a work terminal and an electrode terminal respectively.

The operation of the electrolytic processing apparatus 500 of this embodiment will be described with reference to the finishing process method.

For the purpose of conducting the finish process, after data concerning the work 520 is input through the input device 522, a work 520 formed into a desired shape by electric discharging process for example is fixed to the work fixing device which is not shown. At the same time, the same electrode 502 as that used in the electric discharging process is fixed to the lower end of a rod 530 of the electrode fixing device 504. The electrode 502 is then lowered to bring its surface 502a to a position where it faces the surface 520a of the work 520 to be processed. The electrode 502 and the work 520 thus opposing each other are immersed in an electrolyte 526 contained in the processing cell 528. This position of the electrode 502 is stored as an origin A and the electrode 502 is raised to a position where a predetermined initial discharge gap is attained. When the gap between the surface 520a to be processed and the electrode surface 502a is filled with the electrolyte 526, the processing is commenced from this position.

In a beginning portion of the finish processing, the power supply system 510 delivers pulses of a predetermined current density, e.g., 15A/cm² computed by the CPU 578 of the processing condition control section 514, to the gap between the work 520 and the electrode 502 for the purpose of improving the fineness of the work surface. For instance, the waveform commanding section 574 of the processing condition control section 514 delivers a control signal which opens five AND gates 564a-1 to 564a-n so as to effect discharges from five capacitors 552-1 to 552-n across the gap between the work 520 and the electrode 502. Meanwhile, other discharge switches 556-6 to 556-n are not turned on so that the associated capacitors 52-6 to 552-n are maintained in the charged state. As a result, the material of the work 502 is made to elute from the surface 502a. After supplying pulses in one or several times, the electrolyte containing electrolytic products stagnant in the gap 532 between the work surface 520a and the electrode surface 502a is forcibly removed by the action of the solenoid 540 of the electrolyte filtering device 524.

After the electrolytic products are removed, the electrode 502 is lowered so that the electrode surface 502a is brought into contact with the surface 520a. Then, the instant position of the electrode is compared with the above-mentioned origin A by the controller 518 to measure the processing depth corresponding to one processing cycle (processing by a single pulse or several pulses). Subsequently, the electrode 502 is raised again so as to recover the predetermined size of the gap 534 between the surface of the work piece 520a and the electrode surface 502a and the gap between the work surface 520a and the electrode surface 502a is filled again with the electrolyte 526 containing no electrolytic product. After elapse of 1 to 5 seconds from the moment at which the electrode 502 has reached a predetermined position where the predetermined size of the gap 532 is formed between the electrode surface 502a and the work surface 520a, pulses are supplied to commence the next processing cycle.

The described finishing process is repeated several times by a number of cycles which is computed by the CPU 578 in accordance with the data input through the input device 522. Then, the CPU 578 delivers a control signal to the current waveform commanding section 574 in order to enable the power supply system 510 to supply film removing pulses of a density higher than that of the finishing process pulses, e.g., 30A/cm², which are delivered to the gap between the work 520 and the electrode 502, by turning on ten AND gates 564a-6 to 564a-15 to enable ten capacitors 552-6 to 552-15 to discharge. These pulses effectively remove the film of the electrolytic products and other matters formed on the processed surface 520a in the preceding one or more processing cycles. In this case, the film removing pulses are supplied immediately after the several cycles of processing (finishing by fineness improving pulses). The cycles of application of the film removing pulses are smaller than that for the surface finishing pulses. During this processing operation the capacitors 552-1 to 552-5 which have discharged in the preceding operation are charged up.

Thus, in this embodiment, the gap 532 between the processed surface 520a and the electrode surface 502a is filled with the electrolyte 526, and pulses for improving the fineness of the surface are supplied across the gap between the work 520 and the electrode 502 from five capacitors 552-1 to 552-5, thereby allowing the material of the work 520a to elute into the electrolyte 526. Then, after removing the electrolytic products generated in the gap between the work surface 520a and the electrode surface 502a, the electrode surface 502a is again brought into contact with the work surface 520a, so that the processing depth per one processing cycle is measured. The processing depths measured in successive processing cycles are accumulated. When a predetermined number of processing cycles is completed, film removing pulses are supplied from ten capacitors 552-6 to 552-15 which have been charged up to remove the film on the processed work surface 520a. Meanwhile, the capacitors 552-1 to 552-5 are charged. Then, fresh electrolyte 526 is supplied into the gap 532 between the work surface 520a and the electrode surface 502a, thereby removing the film. After elapse of a time of 1 to 5 seconds, the electrolyte 526 is stationed, i.e., the flow of the electrolyte is stopped and made still. In this state, the surface fineness improving pulses are applied again to effect the processing. This series of operation is repeated for a predetermined period of time in accordance with the signal from the control device 518.

The accumulated value of the measured processing depths is compared with the command value of the processing depth which has been computed on the processing condition control section 54 in accordance with the data input through the input device 522. When the difference between the accumulated processing depth and the command processing depth has come down below a predetermined value, e.g., 1 µm, the CPU 578 delivers a control signal to the waveform commanding section 574. In consequence, the power supply system 510 delivers luster finishing pulses of a current density which is 1.5 or higher than that of the surface fineness pulses, e.g., 60A/cm², which are supplied to the gap between the work 520 and the electrode 502, by turning all the AND gates 564a-1 to 564a-n of the gate circuit 564 to allow all the capacitors 552-1 to 552-n. This operation is repeated in the same manner as that described before for a predetermined number of times which depends on the shape and processing area of the work but is smaller than that of the surface fineness improving pulses, whereby a mirror-finished luster surface is obtained on the work.

As will be understood from the foregoing description, the number of the capacitors employed is changed in accordance with the current density to be attained. For instance, it is possible to use selectively a plurality of capacitors in such a manner that the pulses of small current density used for improving the surface fineness are provided by discharges from some of these capacitors, while, in a subsequent mode in which a higher current density is required for removing film on the work surface, pulses are supplied by discharges from the capacitors which were not used in the preceding surface fineness improving operation. This means that the switching from the surface fineness improving pulse mode to the film removing pulse mode can be conducted without any interval which would otherwise be required for charging up the capacitors. The same also applies to the case where the pulse mode is switched from a mode employing a higher current density to a mode employing a lower current density. Namely, in such a case, it is required only to lower the charging voltage capacitors which are to be used for discharging, so that the length of time required for the switching of the mode is shortened advantageously. Furthermore, in the finishing process which requires a low current density, the number of the capacitors employed is reduced so as to reduce the total electrostatic capacitance of the capacitors, whereby the length of time required for charging up these capacitors is shortened. In consequence, it is possible to shorten the processing time and to smooth the operation for switching between two pulse modes of different current densities.

In the third embodiment described before the number of the capacitors used is changed in accordance with the current density to be obtained to allow selected capacitors to discharge. The arrangement may be such that the plurality of capacitors is grouped into a plurality of blocks each having a predetermined number of capacitors and a discharge switch is provided for each block or for each capacitor of each block. By selectively operating these discharge switches it is possible to control the discharge operation on the basis of blocks or the independent capacitor. In the embodiment described above, the processing condition control section and the charging/discharging control section are arranged independently of each other. This, however, is not exclusive and these sections may be constructed as a unit.

Fig. 19 shows a modification of the third embodiment. In this Figure, the same reference numerals are used to denote the same parts or members, and a detailed description of such parts or members is omitted. This modification features the use of a pair of charging/discharging sections 554a, 544b. Pairs of voltage detectors 560a, 560b, voltage comparators 562a, 562b and charging voltage commanding sections 570a, 570b are respectively provided for the pair of charging/discharging sections 554a, 554b.

The charging/discharging section 54a includes a plurality of capacitors 552a-1 to 552a-n, a plurality of diodes 554a-1 to 554a-n for preventing backward flow, a plurality of discharge switches 556a-1 to 556a-n and a single charging switch 558a. The charging/discharging section 544b has the same construction: namely, it has capacitors 552b-1 to 552b-n, diodes 554b-1 to 554b-n, discharge switches 556b-1 to 556b-n and a charging switch 558b. The discharge sides of all the discharge switches 556a-1 to 556a-n and 556b-1 to 556b-n are connected to the work 520.

The charging/discharging sections 544a, 544b are controlled by the charging/discharging control section 546 and the processing condition control section 514 which are provided with voltage detectors 560a, 560b, voltage comparators 562a, 562b and charging voltage commanding sections 570a, 570b, corresponding to the respective charging/discharging sections 544a, 544b. The outputs of the gate circuit 564 of the charging/discharging control section 546 are connected to the discharge switches 556a-1 to 556a-n.

The operation of this embodiment is as follows. During the finishing process which is conducted in the beginning part of the process with pulses of a low current density, the CPU 578 provides a control signal which enables the charging voltage commanding section 570a to set a command charging voltage for attaining the desired low current density. Meanwhile, no value is set by the charging voltage commanding section 570b. This command value is compared with the voltage detected by the voltage detector 560a by means of the voltage comparator 562a. In the initial state the condition of (command voltage) > (detected voltage) is met. As a result, the charging switch 558a is turned on to enable the capacitors 552a-1 to 552a-n to be charged. After the charging of the capacitors 552a-1 to 552a-n, the processing condition control section 514 provides a control signal for turning on the AND gate (not shown) of the gate circuit 564 connected to the discharge switches 556a-1 to 556a-nm, thereby allowing the capacitors 552a-1 to 552a-n to discharge. Thus, the supply of the discharge pulses to the gap between the work 520 and the electrode 502 is effected only by one of two charging/discharging section 554a, when the finishing process is conducted with pulses of a low current density.

In the case of the finishing process which is conducted in the later part of the processing with pulses of a higher current density, the capacitors 552a-1 to 552a-n of the charging/discharging section 544a are charged up in the same manner as that described above. The capacitors 552b-1 to 552b-n of the charging/discharging section 544b are charged up similarly. Then, the processing condition control section 514 produces a control signal which operates to turn on all the AND gates (not shown) of the gate circuit 564 so that discharge is made from all the capacitors 552a-1, to 552a-n and 552b-1 to 552b-n. Thus, the pulses are supplied from both of two charging/discharging sections 544a, 544b in the finishing process which requires pulses of a high current density.

Thus, in this modification, there are two charging/discharging sections 544a, 544b which are provided with plurality of capacitors 552a-1 to 552a-n and 552b-1 to 552b-n, as well as plurality of discharge switches 556a-1 to 556a-n and 556-1 to 556b-n, and only one or both of these charging/discharging sections are used in accordance with the control signals from the charging/discharging control section 546 and the processing condition control section 514, depending on the current density of the pulses to be obtained. It is therefore possible to reduce the total electrostatic capacitance of the capacitors 552a-1 to 552a-n and 552b-1 to 552b-n, thus offering the same advantages as that derived from the third embodiment.

Although in this modification only two charging/discharging sections, each including a plurality of capacitors and discharge switches, are used, the modification may be further modified such as to include three or more charging/discharging sections.

### (Advantages of the Invention)

As will be understood from the foregoing description, according to the first embodiment of the present invention, the discharge switches are controlled by the control section in such a manner that a plurality of capacitors can be selectively allowed to discharge and that the discharge from the capacitor or capacitors can be stopped when a predetermined condition is met, e.g., when the discharge current has come down below the minimum electric current. In addition, the value of the charging current for charging up the capacitors is limited to a value necessary for charging up these capacitors, even when the amount of charges, i.e., the discharge current, from each capacitor is increased, so that noise generated in the power supply side can be diminished.

With the second embodiment of the present invention arrangement, it is possible to control suitably the number of the capacitors to be used, in accordance with the current densities of the pulses to be supplied. In addition, the charges in the capacitors can be discharged efficiently. It is also possible to supply pulses in large current densities so as to process three-dimensional work surface in a short time and with a high precision into a mirror-finished surface.

With the third embodiment of the invention, it is possible to use the capacitors efficiently in accordance with the current density to be attained, so that the charging time and the discharging time can be shortened to shorten the processing time. In addition, switching between two pulse modes of different current densities can be effected smoothly, thus ensuring a good quality of the processed surface.

## Claims

1. A power supply system for an electrolytic processing apparatus of the type having an electrode (12) which is positioned to oppose a work (14) within an electrolyte such that the work (14) is processed and finished by discharge of pulses between said work (14) and said electrode (12), said power supply system comprising: a discharge section (1) including a plurality of capacitors (16-1 to 16-n) connected in parallel and adapted for discharging charges to the gap between said work (14) and said electrode (12) which face each other across said electrolyte, rectifiers (18-1 to 18-n) connected to said capacitors (16-1 to 16-n) such as to prevent reversing of current to the power supply side, and discharge switches (20-1 to 20-n) connected to said capacitors and adapted to be opened and closed so as to selectively enable said capacitors to discharge said charges, a power source unit (8) for supplying predetermined electric power to said capacitors (16-1 to 16-n), a charging section (6) having a charging switch (32) for connecting or disconnecting the power source unit (8) from the charging section (6), and a control section (10) for opening and closing said discharge switches (20-1 to 20-n), thereby controlling the discharge of charges from said capacitors (16-1 to 16-n),
**characterized in**
that said control section (10) enables to open and to close all or some of the plurality of discharge switches (20-1 to 20-n) simultaneously, and
that the charging switch (32) operates for charging the capacitors (16-1 to 16-n) in accordance with the signal of a comparator (30) which compares a detected charging voltage with a command charging voltage and when the detected charging voltage is below the command charging voltage, the charging switch (32) is turned on.

2. A power supply system of an electrolytic processing apparatus according to Claim 1, wherein said power source unit (8) includes a transformer (22) and a rectifier (24) so as to be able to supply a D.C. voltage to said capacitors (16-1 to 16-n).

3. A power supply system of an electrolytic processing apparatus according to Claim 1 or 2, wherein said charging section (6) includes a charging voltage setting device (26) for setting the command charging voltage for charging said capacitors (16-1 to 16-n).

4. A power supply system of an electrolytic processing apparatus according to Claim 1 to 3, wherein said control section (10) includes a current waveform commanding device (34) for setting a command of the waveform of charges discharged across the gap between said work (14) and said electrode (12) which face each other across said electrolyte, a pulse generator (36) adapted for generating pulses of a pulse width corresponding to the charges discharging, and a gate circuit (38) operative in response to the inputs from said current waveform commanding device (34) and said pulse generator (36) and adapted for delivering opening and closing driving signals to said discharge switches (20-1 to 20-n) so as to enable the charges of said capacitors (16-1 to 16-n) to be discharged in a desired waveform.

5. A power supply system of an electrolytic processing apparatus according to claim 1 to 4, wherein said control section (10) includes a minimum current commanding device (130) for setting a command of the minimum discharge current formed by said charges discharged in the gap between said work (14) and said electrode (12), a discharge current detector (132) for detecting the discharge current formed by the charges discharged in the gap between said work (14) and said electrode (12), a current comparator (134) for comparing said command of minimum discharge current and the discharge current detected by said discharge current detector (132), and a gate circuit (136) operative in response to inputs from said current waveform commanding device (34), said pulse generator (36) and said current comparator (134), and adapted to deliver opening and closing driving signals to said discharge switches (20-1 to 20-n) in such a manner as to allow said capacitors (16-1 to 16-n) to discharge in a desired waveform when the detected discharge current is greater than said command of said discharge current, whereas, when the detected discharge current is below said command of said discharge current, so as to stop discharge from said capacitors (16-1 to 16-n).

6. A power supply system of an electrolytic processing apparatus according to any one of Claims 1 to 5, wherein said charging voltage commanding device (26) of said charging section (6), and said current waveform commanding device (34) and said pulse generator (36) of said control section (10) are constructed in the form of and arithmetic processing unit.

7. Use of the power supply system of an electrolytic processing apparatus according to any one of Claims 1 to 6, wherein said power supply system is used as the power source of an electrolytic processing apparatus which is adapted to process said work (14) by electrolytically eluting said work (14) by means of discharge of charges across the gap between said work (14) and said electrode (12) which is disposed to oppose said work across said electrolyte.

8. Use of the power supply system of an electrolytic processing apparatus according to any one of Claims 1 to 6, wherein said power supply system is used as the power source of an electrolytic processing apparatus which is adapted to process said work (14) by melting and evaporating said work by means of discharge of charges across the gap between said work (14) and said electrode (12) which is disposed to oppose said work (14) across said electrolyte.

9. A power supply system for an electrolytic processing apparatus according to Claim 1 to 8, wherein said discharge switch (20-1 to 20-n) is constituted by a GTO thyristor (258-1 to 258-n).

10. A power supply system for an electrolytic processing apparatus according to Claim 1 to 8, wherein said discharge switch (20-1 to 20-n) is constituted by a pair of thyristors (408-1 to 408-n, 410-1 to 410-n).

11. Use of the power supply system for an electrolytic processing apparatus according to claim 1 to 10, wherein the work 14 is processed and finished by discharge of at least two modes of pulses of different current densities between said work 14 and said electrode 12.

## Patentansprüche

1. Stromversorgungssystem für ein elektrolytisches Behandlungsgerät von der Art mit einer Elektrode (12), die gegenüber einem Bearbeitungsgegenstand (14) innerhalb eines Elektrolyts angeordnet ist, so daß der Bearbeitungsgegenstand (14) durch Entladen von Pulsen zwischen dem Bearbeitungsgegenstand (14) und der Elektrode (12) bearbeitet und oberflächenbehandelt wird, wobei das Stromversorgungssystem umfaßt:
einen Entladeabschnitt (1) einschließlich einer Anzahl von Kondensatoren (16-1 bis 16-n), die parallel geschaltet sind und für ein Entladen von Ladungen an den Spalt zwischen dem Bearbeitungsgegenstand (14) und der Elektrode (12) geeignet sind, die sich einander quer zum Elektrolyt gegenüberliegen, Gleichrichter (18-1 bis 18-n), die mit den Kondensatoren (16-1 bis 16-n) so verbunden sind, daß ein Umdrehen des Stromes zu der Stromversorgungsseite verhindert wird, und Entladeschalter (20-1 bis 20-n), die mit den Kondensatoren verbunden sind und geeignet sind, geöffnet und geschlossen zu werden, um so wahlweise ein Entladen der Ladungen durch die Kondensatoren zu ermöglichen, eine Stromversorgungseinheit (8) zum Zuführen einer vorbestimmten elektrischen Leistung an die Kondensatoren (16-1 bis 16-n), einen Ladeabschnitt (6) mit einem Ladeschalter (32) zum Verbinden oder Trennen der Stromversorgungseinheit (8) von dem Ladeabschnitt (6), und einen Steuerabschnitt (10) zum Öffnen und Schließen der Entladeschalter (20-1 bis 20-n), wobei das Entladen von Ladungen der Kondensatoren (16-1 bis 16-n) gesteuert wird,
**dadurch gekennzeichnet,**
daß der Steuerabschnitt (10) ermöglicht, alle oder einige der Anzahl von Entladeschalter (20-1 bis 20-n) gleichzeitig zu öffnen und zu schließen, und
daß der Ladeschalter (32) zum Laden der Kondensatoren (16-1 bis 16-n) in Übereinstimmung mit dem Signal eines Vergleichers (30) arbeitet, der eine wahrgenommene Ladespannung mit einer Befehlsladespannung vergleicht und wenn die wahrgenommene Ladespannung unterhalb der Befehlsladespannung liegt, wird der Ladeschalter (32) eingeschaltet.

2. Stromversorgungssystem für ein elektrolytisches Behandlungsgerät nach Anspruch 1, wobei die Stromversorgungseinheit (8) einen Transformator (22) und einen Gleichrichter (24) umfaßt, um so eine Gleichspannung an die Kondensatoren (16-1 bis 16-n) liefern zu können.

3. Stromversorgungssystem für ein elektrolytisches Behandlungsgerät nach Anspruch 1 oder 2, wobei der Ladeabschnitt (6) eine Ladespannungssetzeinrichtung (26) zum Einstellen der Befehlsladespannung zum Laden der Kondensatoren (16-1 bis 16-n) umfaßt.

4. Stromversorgungssystem für ein elektrolytisches Behandlungsgerät nach den Ansprüchen 1 bis 3, wobei der Steuerabschnitt (10) umfaßt eine Stromwellenformbefehlseinrichtung (34) zum Abgeben eines Befehls der Wellenform von Ladungen, die über den Spalt zwischen dem Bearbeitungsgegenstand (14) und der Elektrode (12) entladen werden, die sich einander quer zum Elektrolyt gegenüberliegen, einen Pulsgenerator (36), der geeignet zum Erzeugen von Pulsen mit einer Pulsbreite entsprechend den entladenden Ladungen, und eine Gate-Schaltung (38), die auf die Eingaben der Stromwellenformbefehlseinrichtung (34) und des Pulsgenerators (36) arbeitet und zum Abgeben von Öffnungs- und Schließsignalen an die Entladeschalter (20-1 bis 20-n) geeignet ist, um so zu ermöglichen, daß die Ladungen der Kondensatoren (16-1 bis 16-n) in einer gewünschten Wellenform entladen werden.

5. Stromversorgungssystem für ein elektrolytisches Behandlungsgerät gemäß den Ansprüchen 1 bis 4, wobei der Steuerabschnitt (10) umfaßt eine Minimalstrombefehlsvorrichtung (130) zum Abgeben eines Befehls des minimalen Entladestroms, der durch die entladenen Ladungen in dem Spalt zwischen dem Bearbeitungsgegenstand (14) und der Elektrode (12) ausgebildet wird, einen Entladestromdetektor (132) zum Wahrnehmen des Entladestroms, der durch die entladenen Ladungen in dem Spalt zwischen dem Bearbeitungsgegenstand (14) und der Elektrode (12) gebildet wird, einen Stromkomparator (134) zum vergleichen des Befehls des Minimalentladestroms und des Entladestroms, der durch den Entladestromdetektor (132) wahrgenommen wird, und eine Gate-Schaltung (136), die in Abhängigkeit der Eingaben der Stromwellenformbefehlseinrichtung (34), des Pulsgenerators (36) und des Stromkomparators (134) arbeitet und geeignet ist, Öffnungs- und Schließsignale an die Entladeschalter (20-1 bis 20-n) in einer Art und Weise abzugeben, um den Kondensatoren (16-1 bis 16-n) zu ermöglichen, sich in einer gewünschten Wellenform zu entladen, wenn der wahrgenommene Entladestrom größer ist als der Befehl des Entladestroms, wobei, wenn der wahrgenommene Entladestrom geringer als der Befehl des Entladestroms ist, die Entladung von den Kondensatoren (16-1 bis 16-n) gestoppt wird.

6. Stromversorgungssystem für ein elektrolytisches Behandlungsgerät gemäß einem der Ansprüche 1 bis 5, wobei die Ladespannungsbefehlseinrichtung (26) des Ladeabschnittes (6) und die Stromwellenformbefehlseinrichtung (34) und der Pulsgenerator (36) des Steuerabschnittes (10) als arithmetische Prozessoreinheit ausgebildet sind.

7. Verwendung des Stromversorgungssystems für ein elektrolytisches Behandlungsgerät gemäß einem der Ansprüche 1 bis 6, wobei das Stromversorgungssystem als Stromquelle für ein elektrolytisches Behandlungsgerät verwendet wird, das geeignet ist, den Bearbeitungsgegenstand (14) durch elektrolytisches Eluieren des Bearbeitungsgegenstandes (14) mittels Entladen von Ladungen über den Spalt zwischen dem Bearbeitungsgegenstand (14) und der Elektrode (12) zu behandeln, die angeordnet ist, um dem Bearbeitungsgegenstand quer zum Elektrolyten gegenüberzuliegen.

8. Verwendung des Stromversorgungssystems für ein elektrolytisches Behandlungsgerät gemäß einem der Ansprüche 1 bis 6, wobei das Stromversorgungssystem als Stromquelle für ein elektrolytisches Behandlungsgerät verwendet wird, das geeignet ist, um die Bearbeitung des Bearbeitungsgegenstandes (14) durch Schmelzen und verdampfen des Bearbeitungsgegenstandes mittels Entladen von Ladungen über den Spalt zwischen dem Bearbeitungsgegenstand (14) und der Elektrode (12) zu behandeln, die angeordnet ist, um dem Bearbeitungsgegenstand (14) um den Elektrolyten gegenüberzuliegen.

9. Stromversorgungssystem für ein elektrolytisches Behandlungsgerät gemäß den Ansprüchen 1 bis 8, wobei der Entladeschalter (20-1 bis 20-n) durch einen GTO-Thyristor (258-1 bis 258-n) ausgebildet ist.

10. Stromversorgungssystem für ein elektrolytisches Behandlungsgerät gemäß den Ansprüchen 1 bis 8, wobei der Entladeschalter (20-1 bis 20-n) durch ein Paar von Thyristoren (408-1 bis 408-n, 410-1 bis 410-n) ausgebildet ist.

11. Verwendung des Stromversorgungssystems für ein elektrolytisches Behandlungsgerät gemäß den Ansprüchen 1 bis 10, wobei der Bearbeitungsgegenstand 14 durch Entladen von wenigstens zwei Arten von Pulsen mit unterschiedlicher Stromdichte zwischen dem Bearbeitungsgegenstand 14 und der Elektrode 12 bearbeitet und oberflächenbehandelt wird.

## Revendications

1. Un système d'alimentation pour un appareil de traitement électrolytique du type comportant une électrode (12) qui est placée face à une pièce traitée (14) dans un électrolyte, de façon que la pièce traitée (14) subisse un traitement et une finition par décharge d'impulsions entre la pièce traitée (14) et l'électrode (12), ce système d'alimentation comprenant : une section de décharge (1) comprenant un ensemble de condensateurs (16-1 à 16-n) connectés en parallèle et capables de décharger des charges dans l'intervalle entre la pièce traitée (14) et l'électrode (12) qui sont disposées face à face en étant séparées par l'électrolyte, des redresseurs (18-1 à 18-n) connectés aux condensateurs (16-1 à 16-n), de façon à empêcher une inversion du courant faisant circuler celui-ci vers le côté de l'alimentation, et des interrupteurs de décharge (20-1 à 20-n) qui sont connectés aux condensateurs et qui peuvent être ouverts et fermés de façon à permettre sélectivement aux condensateurs de décharger les charges précitées; une source d'énergie (8) qui est destinée à fournir une énergie électrique prédéterminée aux condensateurs (16-1 à 16-n), une section de charge (6) ayant un interrupteur de charge (32) pour connecter ou déconnecter la source d'énergie (8) et la section de charge (6), et une section de commande pour ouvrir et fermer les interrupteurs de décharge (20-1 à 20-n), et pour commander ainsi la décharge de charges à partir des condensateurs (16-1 à 16-n),
**caractérisé** en ce que
la section de commande (10) permet d'ouvrir et de fermer simultanément la totalité ou certains des interrupteurs de l'ensemble d'interrupteurs de décharge (20-1 à 20-n), et en ce que
l'interrupteur de charge (32) fonctionne de façon à charger les condensateurs (16-1 à 16-n) conformément au signal d'un comparateur (30) qui compare une tension de charge détectée avec une tension de charge de référence, et lorsque la tension de charge détectée est inférieure à la tension de charge de référence, l'interrupteur de charge (32) est fermé.

2. Un système d'alimentation d'un appareil de traitement électrolytique selon la revendication 1, dans lequel la source d'énergie (8) comprend un transformateur (22) et un redresseur (24), de façon à pouvoir fournir une tension continue aux condensateurs (16-1 à 16-n).

3. Un système d'alimentation d'un appareil de traitement électrolytique selon la revendication 1 ou 2, dans lequel la section de charge (6) comprend un dispositif de fixation de tension de charge (26) pour fixer la tension de charge de référence pour charger les condensateurs (16-1 à 16-n).

4. Un système d'alimentation d'un appareil de traitement électrolytique selon les revendications 1 à 3, dans lequel la section de commande (10) comprend un dispositif de commande de forme d'onde de courant (34) qui est destiné à fixer une référence pour la forme d'onde des charges qui sont déchargées dans l'intervalle entre la pièce traitée (14) et l'électrode (12) disposées face à face avec l'électrolyte entre eux, un générateur d'impulsions (36) qui est conçu pour générer des impulsions d'une largeur d'impulsion correspondant à la décharge des charges, et un circuit de portes(38) qui fonctionne sous la dépendance des signaux d'entrée provenant du dispositif de commande de forme d'onde de courant (34) et du générateur d'impulsions (36), et qui est conçu pour appliquer des signaux d'attaque d'ouverture et de fermeture aux interrupteurs de décharge (20-1 à 20-n), de façon à permettre la décharge des charges des condensateurs (16-1 à 16-n) selon une forme d'onde désirée.

5. Un système d'alimentation d'un appareil de traitement électrolytique selon les revendications 1 à 4, dans lequel la section de commande (10) comprend un dispositif de commande de courant minimal (130) qui est destiné à fixer une référence pour le courant de décharge minimal qui est formé par les charges déchargées dans l'intervalle entre la pièce traitée (14) et l'électrode (12), un détecteur de courant de décharge (132) destiné à détecter le courant de décharge qui est formé par les charges qui sont déchargées dans l'intervalle entre la pièce traitée (14) et l'électrode (12), un comparateur de courant (134) qui est destiné à comparer la référence de courant de décharge minimal et le courant de décharge qui est détecté par le détecteur de courant de décharge (132), et un circuit de portes(136) qui fonctionne sous la dépendance de signaux d'entrée provenant du dispositif de commande de forme d'onde de courant (34), du générateur d'impulsions (36) et du comparateur de courant (134) et qui est conçu de façon à appliquer des signaux de commande d'ouverture et de fermeture aux interrupteurs de décharge (20-1 à 20-n), de manière à permettre aux condensateurs (16-1 à 16-n) de se décharger selon une forme d'onde désirée lorsque le courant de décharge détecté est supérieur à la référence de courant de décharge, et de façon à arrêter la décharge des condensateurs (16-1 à 16-n) lorsque le courant de décharge détecté est inférieur à la référence de courant de décharge.

6. Un système d'alimentation d'un appareil de traitement électrolytique selon l'une quelconque des revendications 1 à 5, dans lequel le dispositif de fixation de tension de charge (26) de la section de charge (26) et le dispositif de commande de forme d'onde de courant (34) et le générateur d'impulsions (36) de la section de commande (10), sont réalisés sous la forme d'une unité de traitement arithmétique.

7. Utilisation du système d'alimentation d'un appareil de traitement électrolytique selon l'une quelconque des revendications 1 à 6, dans laquelle le système d'alimentation est utilisé à titre de source d'énergie d'un appareil de traitement électrolytique qui est conçu pour traiter la pièce traitée (14) en effectuant un enlèvement électrolytique de matière à partir de cette pièce (14), par la décharge de charges dans l'intervalle entre la pièce traitée (14) et l'électrode (12) qui est disposée face à la pièce, avec l'électrolyte entre elles.

8. Utilisation du système d'alimentation d'un appareil de traitement électrolytique selon l'une quelconque des revendications 1 à 6, dans laquelle le système d'alimentation est utilisé à titre de source d'énergie d'un appareil de traitement électrolytique qui est conçu de façon à traiter la pièce traitée (14) par fusion et évaporation de cette pièce, par décharge de charges dans l'intervalle entre la pièce traitée (14) et l'électrode (12) qui est disposée face à la pièce traitée (14) avec l'électrolyte entre elles.

9. Un système d'alimentation pour un appareil de traitement électrolyte selon les revendications 1 à 8, dans lequel l'interrupteur de décharge (20-1 à 20-n) est constitué par un thyristor à gain de commande à l'ouverture, ou GTO (258-1 à 258-n).

10. Un système d'alimentation pour un appareil de traitement électrolytique selon les revendications 1 à 8, dans lequel l'interrupteur de décharge (20-1 à 20-n) est constitué par une paire de thyristors (408-1 à 408-n, 410-1 à 410-n).

11. Utilisation du système d'alimentation pour un appareil de traitement électrolytique selon les revendications 1 à 10, dans laquelle la pièce traitée (14) fait l'objet d'un traitement et d'une finition par décharge selon au moins deux modes d'impulsions ayant des densités de courant différentes, entre la pièce traitée (14) et l'électrode (12).
